# EUROPEAN PATENT SPECIFICATION

(11) **EP 0 692 362 B1**
(45) Date of publication and mention of the grant of the patent: **12.12.2001**
(21) Application number: 95110729.1
(22) Date of filing: 10.07.1995
(51) Int. Cl.: B29C 45/56, B29C 45/16

(54) **Method for producing thermoplastic resin molded article and mold assembly therefor**
Verfahren zur Herstellung eines thermoplastischen Kunststoffgegenstandes und Formzusammenbau dafür
Procédé de fabrication d'un article moulé en matière thermoplastique et assemblage de moule associé

(30) Priority: 11.07.1994 JP 15849694; 19.07.1994 JP 16694694
(43) Date of publication of application: 17.01.1996
(73) Proprietor: SUMITOMO CHEMICAL COMPANY LIMITED, Osaka-shi, Osaka 541-0041 (JP)
(72) Inventor: Matsumoto, Masahito, Ibaraki-shi, Osaka 567 (JP); Usui, Nobuhiro, Takatsuki-shi, Osaka 569 (JP); Terashima, Seiji, Funabashi-shi, Chiba-ken 273 (JP); Gotoh, Satoru, Funabashi-shi, Chiba-ken 273 (JP)
(74) Representative: VOSSIUS & PARTNER

(56) References cited:
- FR-A- 2 616 374
- GB-A- 2 271 956
- PATENT ABSTRACTS OF JAPAN vol. 940 no. 011 & JP-A-06 328579 (SHOWA DENKO KK) 29 November 1994,

## Description

The present invention relates to a method for producing a thermoplastic resin molded article and a thermoplastic resin molded article (multilayer molded article) partially laminated with a skin material.

Thermoplastic resin molded articles and thermoplastic resin molded articles having skin materials laminated thereon are widely used for interior automotive parts (e.g., a door trim, a rear trim, and an instrument panel), interior and exterior parts of home electronic equipments, and the like.

A method for producing such a thermoplastic resin molded article and a resin molded article laminated with a skin material is described in U.S. Patent No. 5,154,872. Further, a method of producing a resin molded article laminated with a skin material is described in Japanese Patent Publication (Kokoku) No. 4-26289 (corresponding to Japanese Patent Laid-Open No. 63-11312).

The present inventors found that the above conventional methods had the following problems.

In the method described in US-A-5 154 872, luster variations or wrinkles called charge marks tend to be generated on the product surface near resin-supplying gates, resulting in a poor outer appearance of the product. Further, in producing a molded article partially laminated with a skin material by using the conventional method, if the desired molded article is relatively large and thus a molten resin-supplying gates in the molds is present in an area which is not laminated with the skin material, luster variations or wrinkles tend to be generated on the product surface of the area, resulting in nonuniformity and a poor outer appearance.

GB-A-2 271 956 discloses a resilient surface sheet element being vacuum molded for a resilient laminate sheet member including a skin sheet and a foam sheet. The resilient surface sheet element is placed in a predetermined recess of a female mold for molding an instrument panel. After a first thermoplastic resin is fed into a space between a male mold and the resilient surface sheet element placed in the female mold the female and the male mold are closed tightly. First thermoplastic resin then flows through a first cavity section formed on a rear face of the resilient surface sheet element to be integrated with the resilient surface sheet element. Before the first thermoplastic resin completely hardens in the first cavity section, a second thermoplastic resin is injected from an injection gate into a second cavity section adjacent to the first cavity section to securely fuse and join with the first thermoplastic resin.

It is an object of the present invention to provide a method for efficiently producing a resin molded article having a uniform surface and an excellent outer appearance while preventing luster variations or wrinkles at a portion of the surface of a desired molded article, which portion recuires an excellent outer appearance or has a designed surface, without making the apparatus bulky, even in producing a large thermoplastic resin molded article.

It is another object of the present invention to provide, even in producing a thermoplastic resin molded article (multilayer molded article) partially laminated with a skin material, a method for efficiently producing a multilayer molded article having a uniform surface and an excellent outer appearance while preventing damage in the skin material and preventing luster variations or wrinkles on a resin surface which is not laminated with the skin material.

It is still another object of the present invention to provide a mold assembly used for the method for the present invention.

These objects are achieved with the features of the claims.

In the method of the present invention, a molded article having an excellent outer appearance can be obtained while preventing luster variations or wrinkles called charge marks at at least an injection-molded portion because not all portions of the resulting article have been molded by press molding. Since injection molding is partially used together with press molding, a high pressurizing force is not required unlike a conventional injection molding method, so the apparatus does not become bulky. Additionally, according to the present invention, it becomes possible to produce efficiently and easily a resin molded article in which a press-molded portion is sufficiently integrated, or in one piece, with an injection-molded portion.

Even when a resin molded article partially laminated with a skin material is to be produced, a decrease in grain patterns formed on the surface of the skin material or damage in skin material can be prevented because the pressing force of the molten resin is not so high, and the skin material is not positionally shifted. In addition, a molded article having an excellent outer appearance at at least an injection-molded portion, in which a press-molded portion is sufficiently integrated with the injection-molded portion, can be obtained.

When a movable dam is used, the press-molded portion and the injection-molded portion of the obtained molded article can be clearly distinguished from each other, and outflow of the first molten resin to the second portion to-be injection-molded is prevented in press molding. For this reason, a high-quality thermoplastic resin molded article which is satisfactorily integrated and has a sharp boundary between the press-molded portion and the injection-molded portion can be produced. In addition, when the movable dam is used, the positional shift of the skin material can be certainly prevented.

The present invention provides a mold assembly for molding a thermoplastic resin.

The term "open state" is defined as a state wherein a cavity clearance between the cavity face of a first mold and the cavity face of a second mold is larger than the thickness of a desired product (thermoplastic molded article). In the present invention, the open state preferably includes a first open state wherein the molds are arranged with a cavity clearance therebetween such that the molded article between the first and second molds can be removed, and a second open state wherein the cavity clearance is smaller than that in the first open state. According to an aspect of the mold assembly of the present invention, the control unit drives a press unit before supply of a first resin, thereby shifting the first and second molds from the first open state to the second open state.

By using the mold assembly of the present invention, the method of the present invention can be simply and efficiently performed.

The present invention will be more fully understood from the detailed description given hereinbelow and the accompanying drawings, which are given by way of illustration only and are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will be apparent to those skilled in the art from this detailed description.
Fig. 1 is a sectional view schematically showing an example of the mold assembly of the present invention;
Fig. 2 is a sectional view schematically showing another example of the mold assembly of the present invention;
Fig. 3 is a sectional view schematically showing still another example of the mold assembly of the present invention;
Fig. 4 is a timing chart showing the operations of a second mold and a resin-supplying gate in an example of the method of the present invention;
Fig. 5 is a timing chart showing the operations of the second mold and the resin-supplying gate in another example of the method of the present invention;
Fig. 6 is a timing chart showing the operations of the second mold and the resin-supplying gate in still another example of the method of the present invention;
Fig. 7 is a perspective view showing an example of a thermoplastic resin molded article produced by the method of the present invention;
Fig. 8 is a sectional view taken along a line X - X of the molded article shown in Fig. 7;
Figs. 9 to 12 are sectional views each of which schematically shows the state in one producing step of the method of the present invention, in which the molded article shown in Fig. 7 is produced using the mold assembly shown in Fig. 1 in accordance with the timing chart shown in Fig. 4;
Fig. 13 is a timing chart showing the operations of the second mold, the resin-supplying gate, and a movable dam in still another example of the method of the present invention;
Figs. 14 to 17 are sectional views each of which schematically shows the state in one producing step of the method of the present invention, in which the molded article shown in Fig. 7 is produced using the mold assembly shown in Fig. 3 in accordance with the timing chart shown in Fig. 13;
Fig. 18 is a perspective view showing an example of a thermoplastic resin molded article partially laminated with a skin material, which is produced by the method of the present invention;
Fig. 19 is a sectional view taken along a line Y-Y of the molded article shown in Fig. 18;
Figs. 20 to 24 are sectional views each of which schematically shows the state in one producing step of the method of the present invention, in which the molded article shown in Fig. 18 is produced using the mold assembly shown in Fig. in accordance with the timing chart shown in Fig. 4; and
Figs. 25 to 29 are sectional views each of which schematically shows the state in one producing step of the method of the present invention, in which the molded article shown in Fig. 18 is produced using the mold assembly shown in Fig. 3 in accordance with the timing chart shown in Fig. 13.

The present invention will be described below with reference to the accompanying drawings. The same reference numerals throughout the drawings denote the same parts.

The mold assembly of the present invention, which is used to mold a thermoplastic resin, will be described.

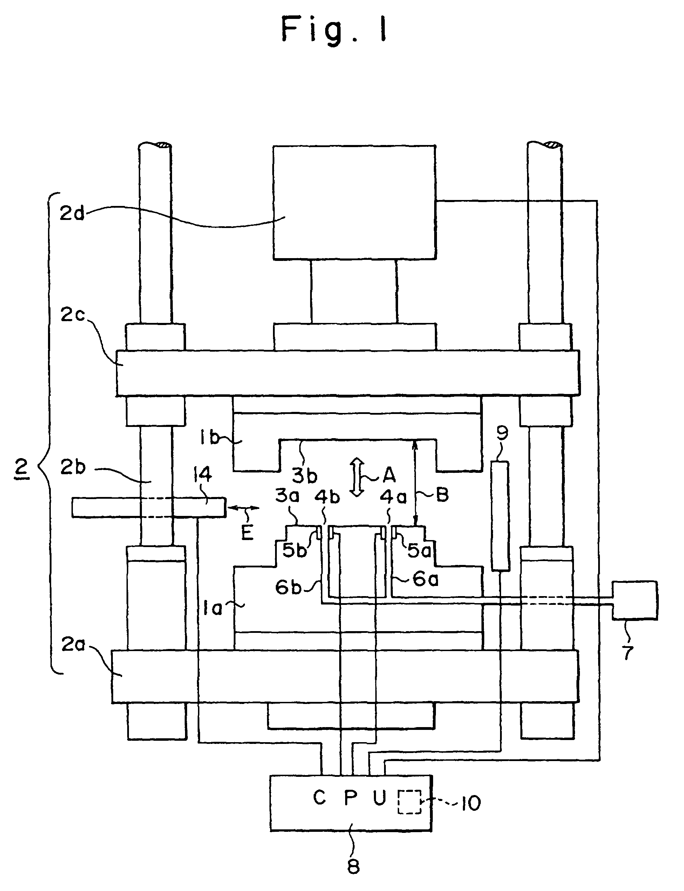

The mold assembly of the present invention is constituted by a first mold 1a and a second mold 1b, as shown in Fig. 1. The molds are attached to a press unit 2. Referring to Fig. 1, the first mold 1a is fixed to a fixed frame 2a of the press unit 2 (the first mold 1a being a fixed mold). The second mold 1b is fixed to a movable frame 2c connected to the fixed frame 2a through a connecting rod 2b (the second mold 1b being a movable mold). A driving unit 2d of the second mold 1b is connected to the movable frame 2c, so that the second mold 1b can be moved in a direction indicated by an arrow A in Fig. 1. The driving unit 2d of the second mold 1b is not particularly limited. For example, a hydraulic driving unit is used.

The first mold 1a and the second mold 1b respectively have cavity faces 3a and 3b opposing each other and corresponding to the shape of a desired product. When the first mold 1a and the second mold 1b are closed, the cavity faces 3a and 3b define a cavity substantially coinciding with the outer shape of the desired molded article.

The second mold 1b can be moved, by the press unit 2, among (i) a first open position where a cavity clearance (B in Fig. 1) between the cavity face 3a of the first mold and the cavity face 3b of the second mold is maintained in a state (first open state) wherein the molded article between the first and second molds 1a and 1b can be removed, (ii) a second open position where the cavity clearance is maintained in a state (second open state) to be smaller than that in the first open state, and (iii) a closed position where the cavity clearance is maintained in a state (closed state) to substantially match the thickness of the desired molded article. The first and second molds 1a and 1b can be maintained at a predetermined closing pressure by the press unit 2. Note that the first and second molds 1a and 1b shown in Fig. 1 are in the first open state.

The first mold 1a shown in Fig. 1 is a so-called male mold whose cavity face 3a is formed as a projecting portion. The second mold 1b is a so-called female mold whose cavity face 3b is formed as a recessed portion. However, the second mold may be a male mold while the first mold may be a female mold. In addition, the first mold may be a movable mold while the second mold may be a fixed mold, or both the molds may be movable molds. Furthermore, the first mold may be an upper mold while the second mold may be a lower mold.

The cavity face 3a of the first mold 1a has at least one first resin-supplying gate 4a open to a first portion where a first molten thermoplastic resin to be press-molded is supplied, and at least one second resin-supplying gate 4b open to a second portion where a second molten thermoplastic resin to be injection-molded is supplied. First and second gate opening/closing means 5a and 5b are respectively arranged around the first and second resin-supplying gates 4a and 4b to independently control closing/opening of the first and second resin-supplying gates 4a and 4b. Note that the gate opening/closing means can be a mechanical means (e.g., shut-off pin) or a means (e.g., a shut-off heater) for melting or solidifying the resin near the gate. The number of first and second resin-supplying gates 4a and 4b is appropriately determined in accordance with the size of the first and second portions or the shape of the desired molded article.

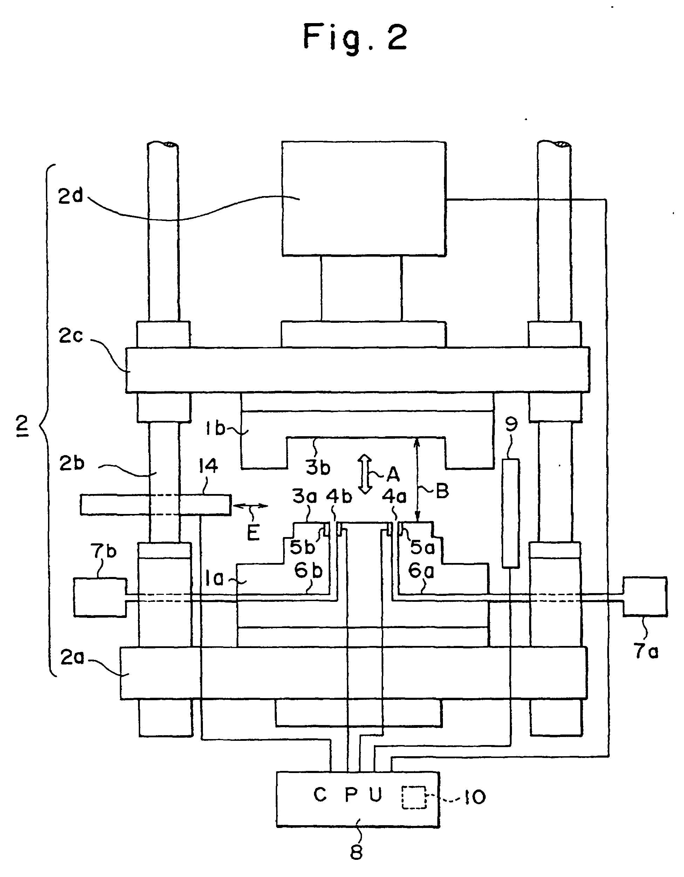

A resin extruding unit 7 is connected to the first and second resin-supplying gates 4a and 4b through first and second resin passages 6a and 6b formed in the first mold 1a, respectively. A first resin-supplying unit is constituted by the first resin-supplying gate 4a, the first gate opening/closing means 5a, the first resin passage 6a, and the resin extruding unit 7. A second resin-supplying unit is constituted by the second resin-supplying gate 4b, the second gate opening/closing means 5b, the second resin passage 6b, and the resin extruding unit 7. The first and second resin passages 5a and 6b shown in Fig. 1 are integrated midway and connected to the single resin extruding unit 7. However, as shown in Fig. 2, the first and second passages 6a and 6b may be respectively connected to first and second resin extruding units 7a and 7b through the independently arranged first and second resin passages 6a and 6b.

A control unit (CPU) 8 is connected to the first and second gate opening/closing means 5a and 5b and the driving unit 2d of the press unit 2 to control these units. In the mold assembly of the present invention, the operations of the driving unit 2d of the press unit 2, and the first and second gate opening/closing means 5a and 5b, and the closing pressure of the first and second molds 1a and 1b are controlled by the control unit 8, as will be described later. It is preferable to control each unit upon detecting that the second mold 1b is set at a predetermined position with respect to the first mold 1a. In the mold assembly shown in Fig. 1, a position detection unit 9 for detecting the position of the second mold 1b is arranged along the side surfaces of the first and second molds 1a and 1b. The position detection unit 9 is also connected to the control unit 8. The position detection unit 9 is not particularly limited. For example, a means for, e.g., mechanically, electrically, or optically detecting the position of the second mold 1b is used. The period of time for opening the first and second resin-supplying gates 4a and 4b (period of time for driving the first and second resin-supplying units), the period of time from closing of the first resin-supplying gate 4a to opening of the second resin-supplying gate 4b, the period of time from closing the second resin-supplying gate 4b to driving of the driving unit 2d of the press unit 2, and the like are controlled by a timer 10 incorporated in the control unit 8.

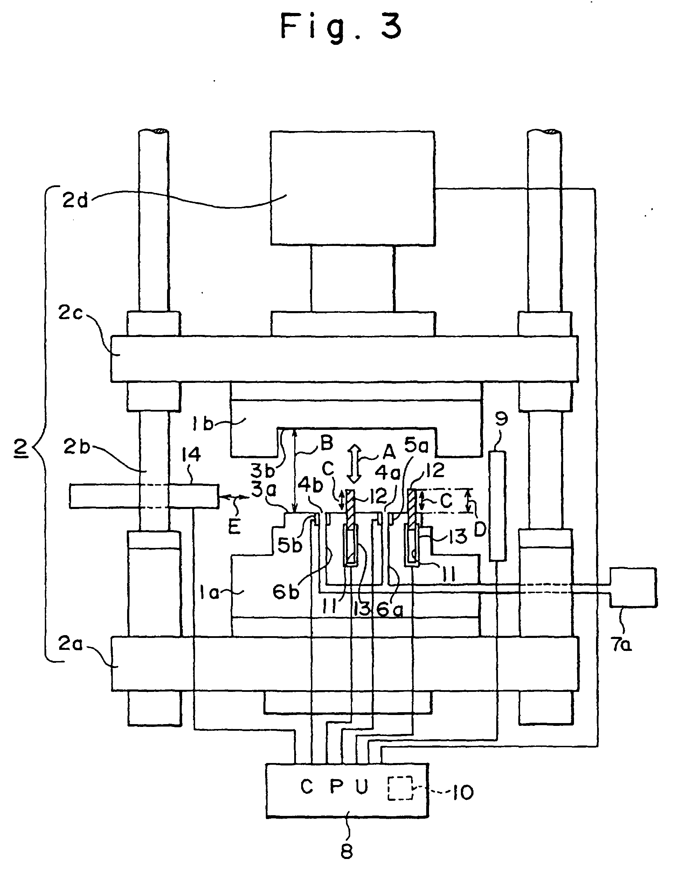

The mold assembly of the present invention may have a movable dam for temporarily partitioning the first portion of the cavity, where the first molten thermoplastic resin is to be supplied, from the second portion of the cavity, where the second molten thermoplastic resin is to be supplied. Fig. 3 shows the mold assembly of the present invention, which has such a movable dam.

The first mold 1a of the mold assembly shown in Fig. 3 has a groove 11 communicating with the cavity face 3a. A movable dam 12 is received in the groove 11. The lower end portion of the movable dam 12 is connected to a dam driving unit 13 arranged in the first mold 1a. The movable dam 12 can be moved (slid) by the dam driving unit 13 in a direction C shown in Fig.3. Although the direction C shown in Fig.3 is substantially parallel to the mold opening/closing direction A, such a direction C may not be parallel to the direction A. With this operation, the movable dam 12 can be moved between the first position where the movable dam 12 is completely received in (put into) the first mold 1a and the second position where a part (upper end portion) of the movable dam 12 projects from the cavity face 3a. Note that the movable dam 12 shown in Fig. 3 is at the second position. The movable dam 12 preferably has an upper surface substantially parallel to the cavity face 3a such that the distal end surface (upper end surface) of the movable dam 12 at the first position forms a single plane together with the cavity face 3a. In addition, the movable dam 12 preferably has almost the same width as that of the groove 11 not to substantially form a gap between the side surface (sliding surface) of the movable dam 12 and the inner surface (sliding surface) of the groove 11 in the first mold 1a. Note that the dam driving unit 13 is not particularly limited. For example, a driving unit using an air or hydraulic pressure, or an electromagnetic driving unit is used.

As described above, in the mold assembly shown in Fig. 3, the movable dam 12 is provided at the boundary between the press-molded portion (first portion where the first resin to be press-molded is to be supplied) and the injection-molded portion (second portion where the second resin to be injection-molded is to be supplied). The movable dam 12 can be slid in the first mold 1a by the dam driving unit 13 in the mold opening/closing direction C so as to project into the cavity. The movable dam 12 may be provided in the second mold or in both the molds.

The movable dam 12 may be continuously or discontinuously provided at the boundary between the press-molded portion and the injection-molded portion. When the press-molded portion is at the central portion of the desired molded article, and the entire peripheral portion of the press-molded portion is surrounded by the injection-molded portion, the movable dam at the boundary is preferably continuous. When the end portion of the press-molded portion corresponds to part of the end portion of the desired molded article, the movable dam may be provided at only a portion where the press-molded portion is in contact with the injection-molded portion. The continuous movable dam here must be only apparently continuous, as a matter of course. As for the structure, the movable dam may be divided into units of predetermined lengths suitable for sliding.

A length (D in Fig. 3) of the portion of the movable dam 12, which projects into the cavity in the mold opening/closing direction C, must be larger than a thickness F (final product thickness) of the desired molded article. However, when the movable dam 12 excessively projects beyond the thickness of the molded article, the mold excessively becomes thicker accordingly, or the strength of the movable dam 12 must be excessively increased. Therefore, the length D is normally smaller than 15 times the final product thickness, and preferably smaller than 10 times the final product thickness.

The dam driving unit 13 is also connected to the control unit (CPU) 8 together with the first and second gate opening/closing means 5a and 5b and the driving unit 2d of the press unit 2. In the mold assembly of the present invention shown in Fig. 3, the operations of the driving unit 2d of the press unit 2, the dam driving unit 13, and the first and second gate opening/closing means 5a and 5b, and the closing pressure of the first and second molds 1a and 1b are controlled by the control unit 8, as will be described later.

As shown in Figs. 1 to 3, the mold assembly of the present invention may have a skin material conveying means 14 in addition to the above arrangement. The skin material conveying means 14 shown in Figs. 1 to 3 can move in a direction indicated by an arrow E in Figs. 1 to 3 while holding a skin material, thereby arranging the skin material at a predetermined position (preferably at the first portion of the cavity) on the cavity face 3a of the first mold 1a in the open state (preferably in the first open state). When the skin material conveying means 14 is arranged, the skin material conveying means 14 is also connected to the control unit (CPU) 8 together with the first and second gate opening/closing means 5a and 5b, and the driving unit 2d of the press unit 2. In the mold assembly of the present invention shown in Figs. 1 to 3, the operations of the driving unit 2d of the press unit 2 and the skin material conveying means 14, and the closing pressure are controlled by the control unit 8, as will be described later. Note that the detailed structure of the skin material conveying means 14 is not particularly limited.

The method of the present invention in which the mold assembly of the present invention is used to produce a thermoplastic resin molded article, and the control sequence of the control unit in the mold assembly of the present invention will be described below.

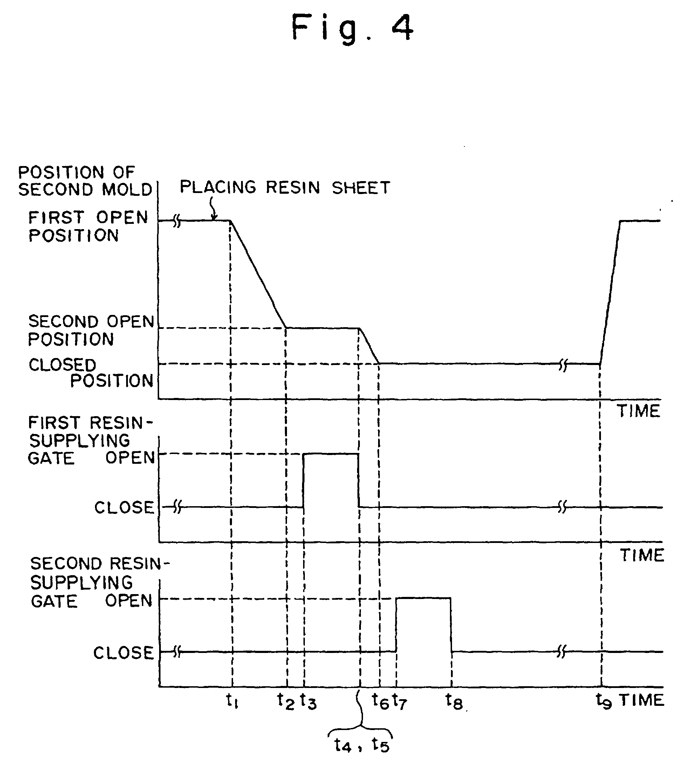

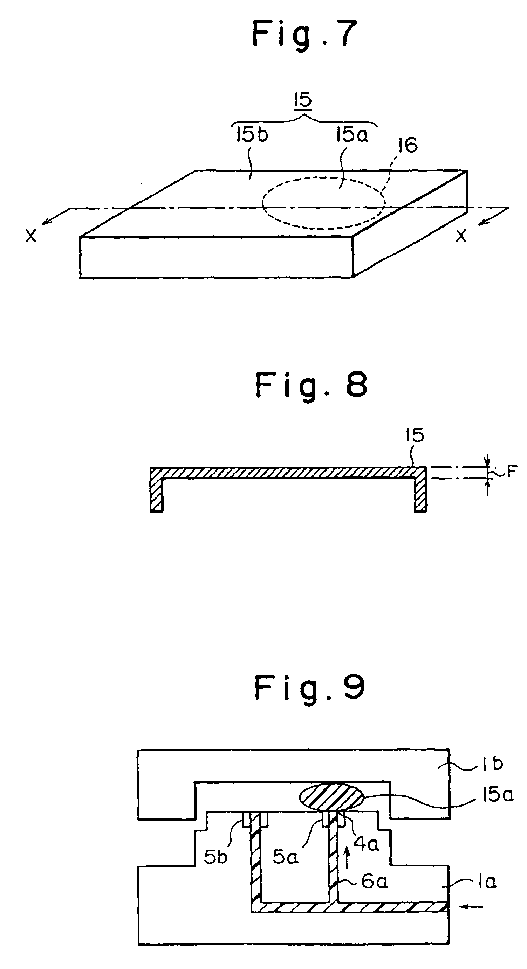

The method of producing a thermoplastic resin molded article shown in Figs. 7 and 8 by using the mold assembly shown in Fig. 1 will be described below with reference to timing charts shown in Figs. 4 to 6. Figs. 9 to 12 are sectional views schematically showing the molds in molding steps in an embodiment of the producing method of the present invention.

Fig. 7 is a perspective view showing an example of a thermoplastic resin molded article 15 obtained by the method of the present invention. Fig. 8 is a longitudinal sectional view taken along a line X - X of the molded article in Fig. 7. A portion surrounded by a dotted line 16 in Fig. 7 is a portion 15a molded by press molding (portion molded at the first portion in the cavity) while the remaining portion is a portion 15b molded by injection molding (portion molded at the second portion in the cavity).

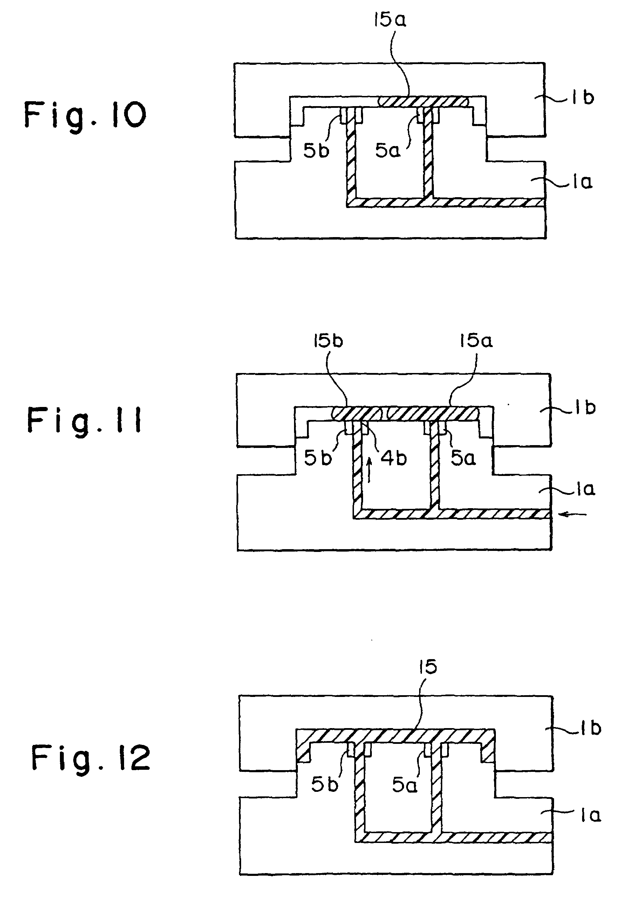

As shown in Fig. 4, the control unit 8 drives the driving unit 2d to lower the second mold 1b from the first open position to the second open position shown in Fig. 9 (t₁ to t₂). Note that the cavity clearance B in the first open state is normally 500 to 1,500 mm, and the cavity clearance B in the second open state is normally (thickness of desired molded article) ö 0.1 to 50 mm. In the second open state wherein the cavity clearance between the two molds is larger than the final product thickness F, the first gate opening/closing means 5a is kept open during a first period of time (t₃ to t₄). With this operation, of the total amount of the molten thermoplastic resin to be supplied, the first molten thermoplastic resin 15a in a necessary amount (first amount) for forming the press-molded portion of the final molded article is supplied from the first resin-supplying gate 4a to the first portion of the cavity face 3a, where the resin is press-molded (Fig. 9). Subsequently, the driving unit 2d is driven to close the second mold 1b from the second open position to the closed position shown in Fig. 10 at the first closing pressure (t₅ to t₆). With this operation, the first resin 15a is press-molded, the cavity including the resin unsupplied portion (portion where the resin is injection-molded: second portion) is set in a closed state, and the cavity clearance B matches the final product thickness F. The first closing pressure is preferably 30 to 90 kgf/cm².

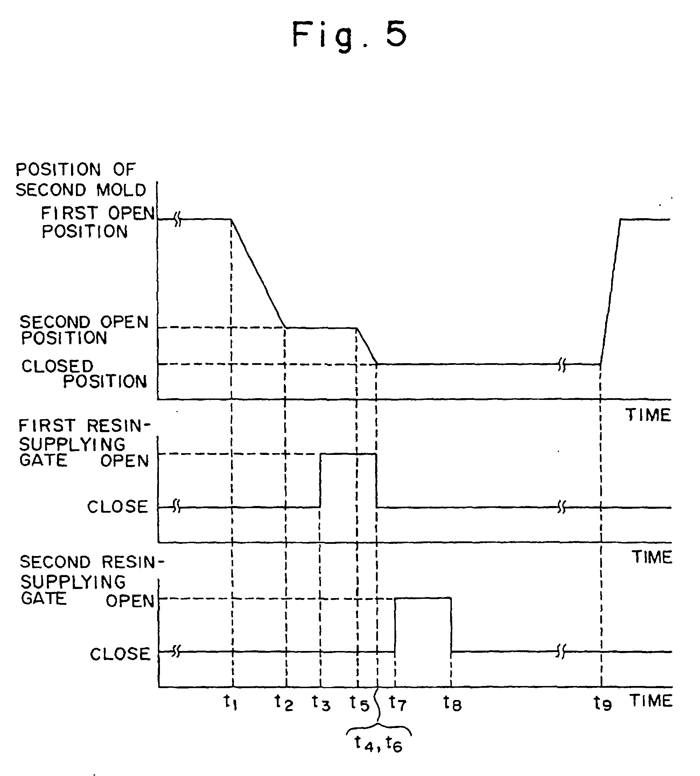

The closing operation may be performed after the first resin in the necessary amount (first amount) is completely supplied, as shown in Fig. 4. Alternatively, as shown in Fig. 5, the closing operation may be started while the first resin is being supplied. In this case, the closing operation is finished upon completion of supply of the first molten resin in the necessary amount. Supply of the first resin and the closing operation can be started at any timing as far as the first resin in the necessary amount is completely supplied when or before the cavity clearance B matches the final product thickness F.

Upon completion of the closing operation, the second gate opening/closing means 5b is kept open during the second period of time (t₇ to t₈) while the first and second molds 1a and 1b are held at the second closing pressure, and the cavity clearance B is held at the final product thickness F. With this operation, the second molten thermoplastic resin 15b in the remaining amount (second amount) is injected from the second resin-supplying gate 4b to the resin unsupplied portion (second portion) in the closed state (Fig. 11), thereby filling the cavity with the first and second resins 15a and 15b (Fig. 12). The second closing pressure is preferably 100 to 400 kgf/cm². In the method of the present invention, injection of the second resin 15b (t₇) is started preferably 0 to 30 seconds, and more preferably 0 to 10 seconds after the first resin 15a is completely supplied (t₄). With this operation, the press-molded first resin 15a and the injection-molded second resin 15b are satisfactorily integrated with each other.

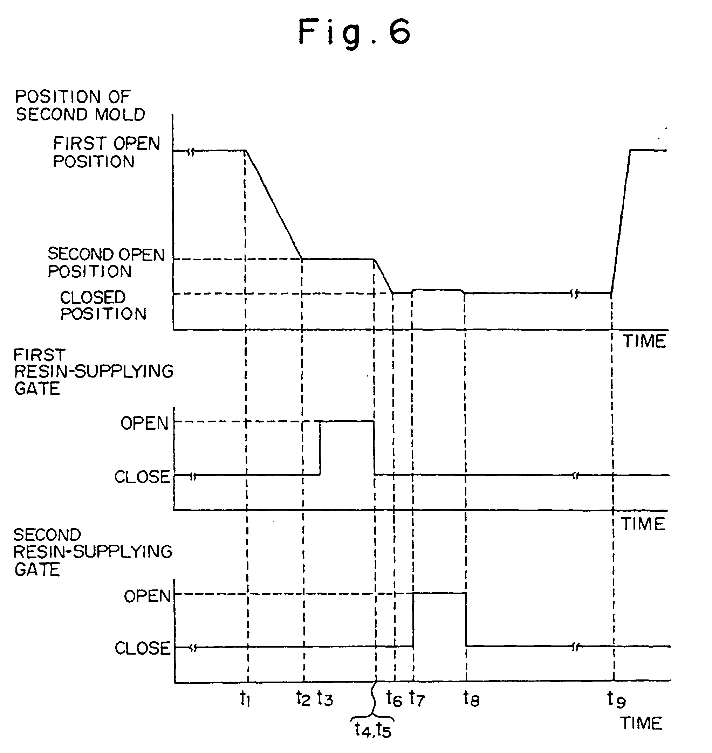

In injection of the second molten resin 15b, the cavity clearance B need not always be strictly "held" at the final product thickness F unless the cavity clearance B is smaller than the final product thickness F. For example, when the second resin is to be injected, the dwell pressure of the two molds 1a and 1b may be reduced. Alternatively, as shown in Fig. 6, the molds 1a and 1b may be slightly opened (preferably to such a degree that the second resin injected will not flow into the first portion (the press-molded portion))by the resin injection pressure, and the closing operation may be performed again until the final product thickness F is set after the second resin is completely supplied. Injection in the present invention also includes these embodiments.

Upon completion of injection molding of the second resin 15b, the molds 1a and 1b are held in a state shown in Fig. 12 during the third period of time, thereby cooling and solidifying the molten thermoplastic resins 15a and 15b. Thereafter, the driving unit 2d is driven to move the second mold 1b from the closed position to the first open position, thereby opening the molds. With this operation, the molded article can be removed (t₉).

In the method of the present invention, by using the mold assembly as shown in Fig. 2, a resin different from the first resin to be supplied to the first portion (press-molded portion) may be used as the second resin to be supplied to the second portion (injection-molded portion), or different resins may be supplied from the resin-supplying gates 4a and 4b, respectively, thereby to obtain a multicolor molded article having two or more colors.

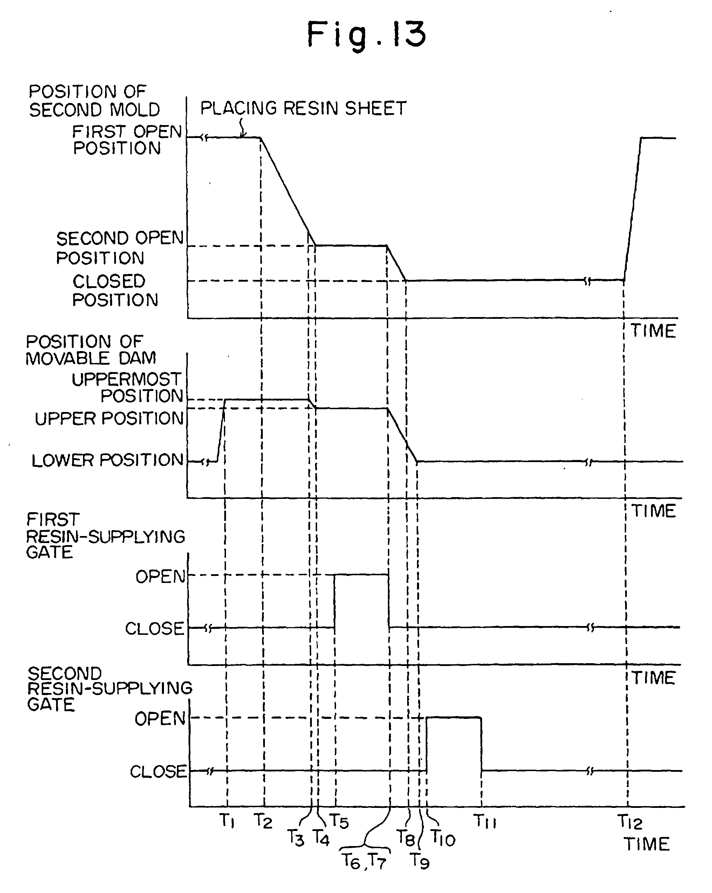

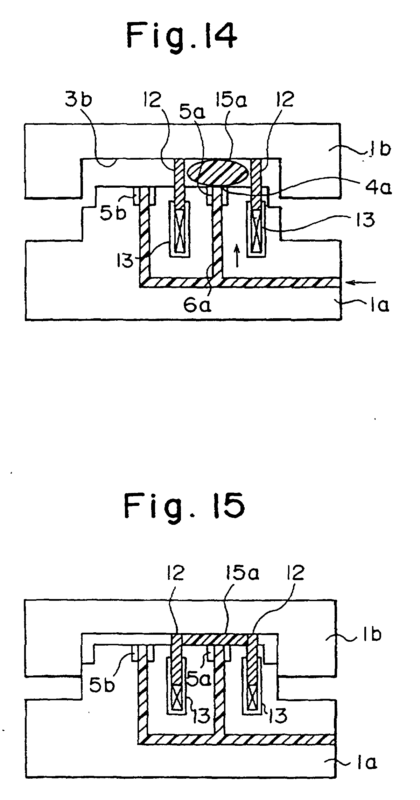

A method in which the mold assembly shown in Fig. 3 is used to produce the thermoplastic resin molded article shown in Figs. 7 and 8 will be described below with reference to a timing chart shown in Fig. 13. Figs. 14 to 17 are sectional views schematically showing the molds in molding steps in an embodiment of the producing method of the present invention.

As shown in Fig. 13, the control unit 8 drives the dam driving unit 13 to move the movable dam 12 from the first position to the second position, thereby causing part of the movable dam 12 to project into the cavity in the first open state (T₁). At this time, the length D of the portion of the movable dam 12, which projects in the cavity, is larger than the final product thickness F. The driving unit 2d is driven to lower the second mold 1b from the first open position to the second open position shown in Fig. 14 (T₂ to T₄). After the cavity face 3b of the second mold 1b is brought into contact with the movable dam 12, the movable dam 12 is also moved from the uppermost position to the upper position in a manner interlocked with the second mold 1b (T₃ to T₄). Therefore, the upper end surface of the movable dam 12 is in contact with the cavity face 3b of the second mold 1b.

The first gate opening/closing means 5a is kept open during the first period of time (T₅ to T₆). With this operation, the first molten thermoplastic resin 15a in a necessary amount (first amount) for forming the press-molded portion is supplied from the first resin-supplying gate 4a to the cavity face (first portion) surrounded by the movable dam 12 (Fig. 14). The driving unit 2d of the press unit 2 and the dam driving unit 13 are driven to close the second mold 1b from the second open position to the closed position shown in Fig. 15 at the first closing pressure while pushing down the movable dam 12 (T₇ to T₈). With this operation, the first resin 15a is press-molded, and the cavity clearance B matches the final product thickness F.

In this case as well, the closing operation may be performed after the first resin is completely supplied. Alternatively, the closing operation may be started while the first resin is supplied, and the movable dam 12 is pushed down. In this case, the closing operation is finished upon completion of supply of the first molten resin in a necessary amount.

Upon completion of the closing cperation, the dam driving unit 13 is driven to return (retreat or put) the movable dam 12 into the first mold 1a (T₈ to T₉). At this time, the distal end surface of the movable dam 12 must match the cavity face 3a of the first mold 1a to form a smooth surface. If the movable dam 12 is insufficiently or excessively returned, three-dimensional patterns are formed on the obtained molded article at a position corresponding to the movable dam.

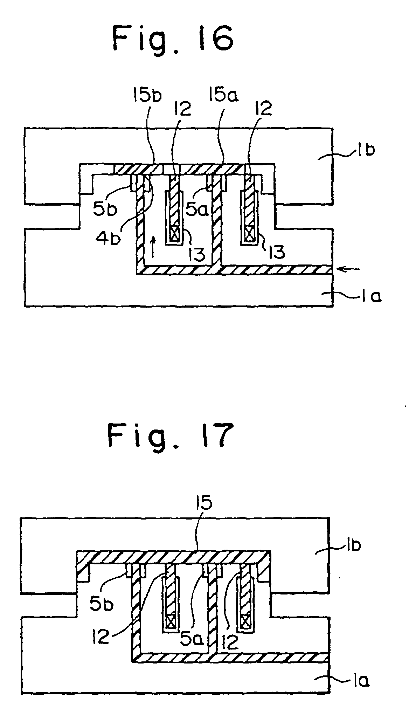

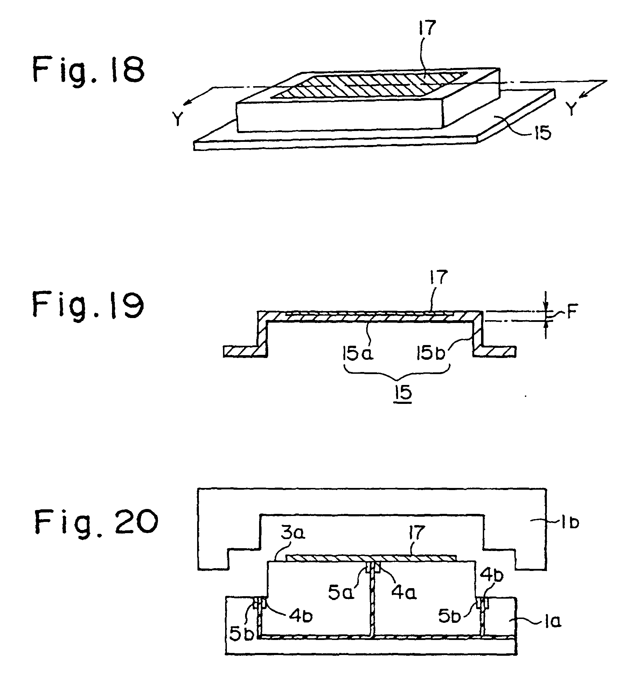

After the movable dam 12 is completely returned, the second molten thermoplastic resin 15b is injected into the remaining cavity (second portion), as shown in Fig. 16 (T₁₀ to T₁₁), thereby filling the cavity with the first and second resins 15a and 15b (Fig. 17), as in the above embodiment. After the second resin 15b is injection-molded, as in the above embodiment, the molten thermoplastic resins 15a and 15b are cooled and solidified, and the molded article is removed from the molds (T₁₂).

The method of producing a resin molded article not laminated with a skin material has been described above. According to the method of the present invention, a resin molded article laminated with a skin material can also be produced. A method of producing a thermoplastic resin molded article shown in Figs. 18 and 19 by using a mold assembly which is the same as that in Fig. 1 except for the shapes of the cavity faces 3a and 3b and the arrangement of the resin-supplying gates 4a and 4b will be described below with reference to the timing chart shown in Fig. 4. Figs. 20 to 24 are sectional views schematically showing the molds in molding steps in an embodiment of the producing method of the present invention.

Fig. 18 is a perspective view showing an example of the thermoplastic resin molded article 15 laminated with a skin material obtained by the method of the present invention. Fig. 19 is a longitudinal sectional view taken along a line Y - Y of the molded article in Fig. 18. The lower portion of a skin material 17 shown in Fig. 19 corresponds to the press-molded portion 15a (portion molded at the first portion of the cavity), and the remaining portion corresponds to the injection-molded portion 15b (portion molded at the second portion of the cavity).

When the area (second portion) not laminated with the skin material 17 is divided by the skin material laminated area (first portion) into two or more portions, at least one second resin-supplying gate 4b is required on the cavity face corresponding to each non-laminated area. Similarly, when the skin material laminated area (first portion) is distributed to two or more portions, at least one first resin-supplying gate 4a is required on the cavity face corresponding to each skin material laminated area.

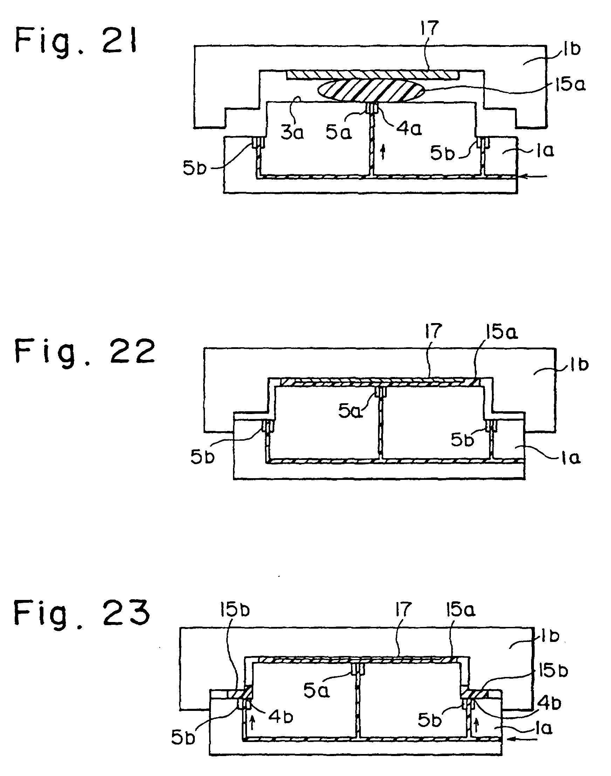

As shown in Fig. 4, the control unit 8 drives the skin material conveying means 14 to place the skin material 17 which is cut into a predetermined size at a predetermined position in the cavity between the first and second molds 1a and 1b in the first open state such that the lower surface of the skin material 17 is brought into contact with the cavity face 3a of the first mold (Fig. 20). The driving unit 2d is driven to lower the second mold 1b from the first open position to the second open position shown in Fig. 21 (t₁ to t₂). When the skin material is used, the cavity clearance B in the second open state is normally (thickness of desired molded article (base material portion)) + 5 to 100 mm.

In the second open state wherein the cavity clearance B is larger than the final product thickness F, the first gate opening/closing means 5a is kept open during the first period of time (t₃ to t₄). With this operation, the first molten thermoplastic resin 15a is supplied between the skin material 17 and the cavity face 3a of the first mold 1a (Fig. 21). The driving unit 2d is driven to close the second mold 1b from the second open position to the closed position shown in Fig. 22 at the first closing pressure (t₅ to t₆). With this operation, the first resin 15a is press-molded together with the skin material 17. At the same time, the cavity including the resin unsupplied portion (non-laminated area: second portion) is set in the closed state, and the cavity clearance B matches the final product thickness F.

The amount of the first molten thermoplastic resin 15a supplied at this time corresponds to, of the total amount of the molten thermoplastic resin to be finally supplied, at least the amount of the resin forming the base material portion laminated with the skin material 17. The specific supply amount changes depending on the ratio of the portion laminated with the skin material 17 to the molded article or the shape of the molded article. The amount is normally twice by weight the calculated resin amount of the base material portion or less, preferably 1.5 times or less by weight, and more preferably 1.3 times or less by weight.

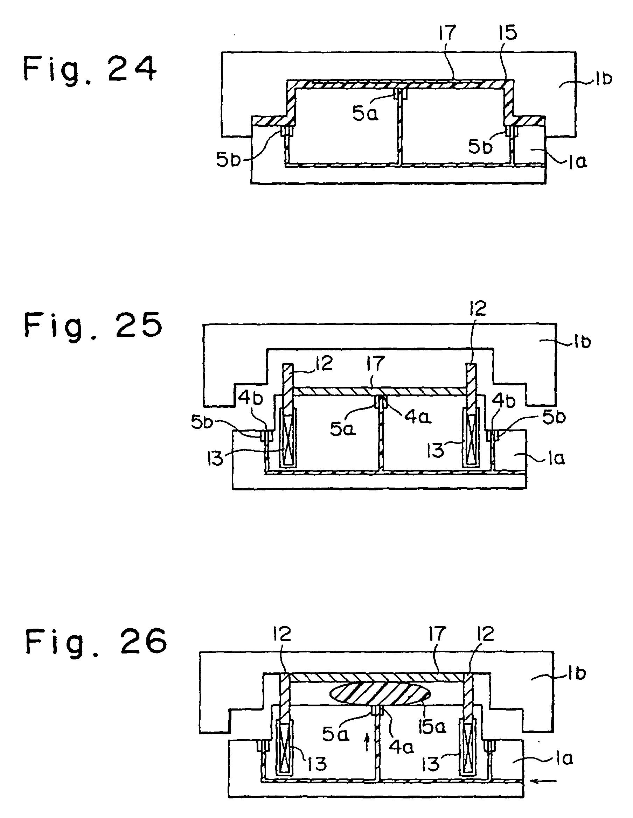

Upon completion of the closing operation, the second gate opening/closing means 5b is kept open during the second period of time (t₇ to t₈) while first and second molds 1a and 1b are held at the second closing pressure, and the cavity clearance B is held at the final product thickness F. With this operation, the second molten thermoplastic resin 15b in the remaining amount (second amount) is injected from the second resin-supplying gate 4b to the resin unsupplied portion (area not laminated with skin material: second portion) in the closed state (Fig. 23), thereby filling the cavity with the first and second resins 15a and 15b (Fig. 24). With this operation, the portion not laminated with the skin material 17 is injection-molded.

When the non-laminated area (second portion) is divided by the skin material laminated area (first portion) into two or more portions, the second molten resin 15b is distributed to each area in accordance with the resin amount required by each area. At this time, the distribution amount of the resin to be supplied is calculated in accordance with the volume to be filled with the resin. However, when the non-laminated area is not completely divided, i.e, when two or more areas communicate with each other, the distribution amount need not always be strictly calculated because the molten thermoplastic resin before cooling/solidifying has a fluidity.

After the second resin 15b is completely injection-molded, the molds 1a and 1b are held in the state shown in Fig. 24 during the third period of time, and the molten thermoplastic resins 15a and 15b are cooled and solidified. Thereafter, the driving unit 2d is driven to move the second mold 1b from the closed position to the first open position, thereby opening the molds. With this operation, the molded article can be removed (t₉).

In the method of the present invention, a resin different from the first resin to be supplied to the skin material laminated area (first portion) may be used as the second resin to be supplied to the non-laminated area (second portion), or different resins may be supplied from the resin-supplying gates 4a and 4b, respectively, thereby to obtain a multicolor molded article having two or more colors.

A method of producing the thermoplastic resin molded article shown in Figs. 18 and 19 by using a mold assembly which is the same as that shown in Fig. 3 except for the shapes of the cavity faces 3a and 3b and the arrangement of the resin-supplying gates 4a and 4b will be described below with reference to the timing chart shown in Fig. 13. Figs. 25 to 29 are sectional views schematically showing the molds in molding steps in an embodiment of the producing method of the present invention.

As shown in Fig. 13, the control unit 8 drives the dam driving unit 13 to move the movable dam 12 from the first position to the second position, thereby causing part of the movable dam 12 to project into the cavity in the first open state (T₁). At this time, the length D of the portion of the movable dam 12, which projects in the cavity, is larger than the final product thickness F. The control unit 8 drives the skin material conveying unit 14 to place the skin material 17 which is cut into a predetermined size at a predetermined position in the cavity between the first and second molds 1a and 1b in the first open state such that the lower surface of the skin material 17 is brought into contact with the cavity face 3a of the first mold (Fig. 25). In this case, it is preferable that the skin material 17 is arranged such that an edge portion of the skin material 17 is set along the movable dam 12. The driving unit 2d is driven to lower the second mold 1b from the first open position to the second open position shown in Fig. 25 (T₂ to T₄). After the cavity face 3b of the second mold 1b is brought into contact with the movable dam 12, the movable dam 12 is also moved from the uppermost position to the upper position in a manner interlocked with the second mold 1b (T₃ to T₄). Therefore, the upper end surface of the movable dam 12 is in contact with the cavity face 3b of the second mold 1b.

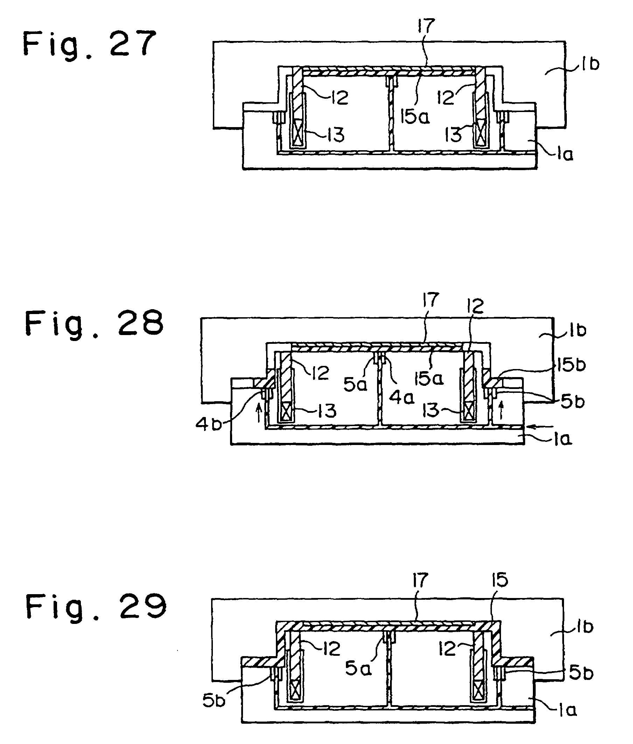

The first gate opening/closing means 5a is kept open during the first period of time (T₅ to T₆). With this operation, the first molten thermoplastic resin 15a in an amount (first amount) corresponding to the amount of the resin forming the base material portion to be laminated with the skin material is supplied from the first resin-supplying gate 4a between the skin material 17 and the cavity face 3a of the first mold in the space (first portion) surrounded by the movable dam 12 (Fig. 26). The driving unit 2d of the press unit 2 and the dam driving unit 13 are driven, thereby closing the second mold 1b from the second open position to the closed position shown in Fig. 27 at the first closing pressure while pushing down the movable dam 12 (T₇ to T₈). With this operation, the first resin 15a is press-molded together with the skin material 17, and the cavity clearance B matches the final product thickness F. In this closing process, positional shift of the skin material 17 is prevented by the movable dam 12. In addition, outflow of the supplied first molten resin into the remaining cavity is also prevented.

Upon completion of the closing operation, the dam driving unit 13 is driven to return the movable dam 12 into the first mold 1a (T₈ to T₉). After the movable dam 12 is completely returned, the second molten thermoplastic resin 15b is injected into the remaining cavity (second portion) corresponding to the non-laminated area as shown in Fig 28 (T₁₀ to T₁₁), as in the above embodiment, thereby filling the cavity with the first and second resins 15a and 15b (Fig. 29).
With this operation, the portion not laminated with the skin material 17 is injection-molded.

After the second resin 15b is injection-molded, the molten thermoplastic resins 15a and 15b are cooled and solidified, and the molded article is removed from the molds (T₁₂), as in the above embodiment.

As the resin used in the present invention, any resin normally used in press molding, injection molding, and extrusion molding can be used. For example, a general thermoplastic resin such as polypropylene, polyethylene, an acrylonitrile-styrene-butadiene block copolymer, polystyrene, polyamide including nylon, polyvinyl chloride, polycarbonate, an acrylic resin, polyacrylate or a copolymer of acrylate, or a styrene-butadiene block copolymer; a thermoplastic elastomer such as EPM or EPDM; a mixture thereof; or a polymer alloy using the above materials can be used. The thermoplastic resin used in the present invention may be foamable or non-foamable.

The thermoplastic resin may contain normally used glass fibers or various fillers such as inorganic and organic fillers, as needed. As a matter of course, the thermoplastic resin may contain various additives such as various pigments, lubricants, antistatic agents, and stabilizers normally used.

As the skin material, conventionally known various skin materials such as various woven or non-woven fabrics, a knitted fabric, a sheet or film of a thermoplastic resin or elastomer, paper, a metal foil, a net, or a foamed thermoplastic resin or elastomer sheet can be used. In accordance with the application purpose, the surface of the skin material may be decorated with three-dimensional patterns (such as grain patterns), printing, dyeing, and the like.

Not only a single skin material but also a composite skin material consisting of a laminate of two or more materials which are bonded to each other with an adhesive or the like can be used. Particularly, a polyvinyl chloride sheet using, as a backing material, a foamed sheet such as a foamed polypropylene sheet, or a thermoplastic elastomer sheet such as EPDM is preferably used.

To use these skin materials, preheating may be performed to increase the adhesive properties between the skin material and the thermoplastic resin, or preshaping may be performed in accordance with the shape of the area to-be laminated with the skin material.

As described above, according to the producing method of the present invention, even a large thermoplastic resin molded article can be produced at a relatively low pressure without making the apparatus bulky. In addition, a resin molded article having a uniform surface and an excellent outer appearance can be efficiently and easily produced while preventing luster variations or wrinkles at a portion of the surface of a desired molded article, which portion requires an excellent outer appearance or has a designed surface.

Further, according to the producing method of the present invention, even when a multilayer molded article partially laminated with a skin material is to be produced, a multilayer molded article having a uniform surface and an excellent outer appearance can be produced while laminating the skin material at a predetermined position without any positional shift and preventing damage to the skin material and luster variations or wrinkles at a resin portion not laminated with the skin material.

### [Examples]

The present invention will be described below in more detail in accordance with examples. However, the present invention is not limited to these examples, as a matter of course.

In Examples 1 and 2 and Comparative Examples 1 and 2, a polypropylene resin (Sumitomo Noblen BPZ5077 available from Sumitomo Chemical Co., Ltd.) was used as the thermoplastic resin.

In Examples 3 and 4 and Comparative Examples 3 and 4, the following skin material and thermoplastic resin were used:
Skin material: Composite skin material obtained by laminating a foamed 3-mm thick polypropylene sheet having an expansion ratio of 15 times on the lower surface of a 0.6-mm thick olefin-based thermoplastic elastomer sheet with grain patterns
Thermoplastic resin: A polypropylene resin available from Sumitomo Chemical Co., Ltd. (Sumitomo Noblen BP25077)

### Example 1

A thermoplastic resin molded article shown in Figs. 7 and 8 (thickness (F): 2.5 mm, length: 400 mm, width: 550 mm, height of side wall portion: 10 mm) was produced using the mold assembly shown in Fig. 1 in accordance with the timing chart shown in Fig. 4 and the steps shown in Figs. 9 to 12.

In this example, the temperature of the supplied molten thermoplastic resin was 200°C, and the temperature of the molds was 40°C.
① The pair of molds comprising the movable second mold 1b and the fixed first mold 1a were shifted from the first open state wherein the cavity clearance B was 600 mm to the second open state wherein the cavity clearance 3 was 6 mm (t₁ to t₂). In the second open state, 250 g of the first molten thermoplastic resin 15a, which corresponded to 1.05 times the resin amount necessary for forming the press-molded portion were supplied from the first resin-supplying gate 4a through the first resin passage 6a in three seconds (t₃ to t₄) (Fig. 9).
② After the first molten thermoplastic resin 15a was supplied, the first resin-supplying gate 4a was closed. The second mold 1b was lowered and closed at a closing pressure of 50 kgf/cm² until the cavity clearance B became 2.5 mm (t₅ to t₆) (Fig. 10).
③ The second resin-supplying gate 4b was kept open while applying the closing pressure to maintain this state, and 350 g of the second molten thermoplastic resin 15b were injected into the remaining cavity in four seconds (t₇ to t₈) (Fig. 11), thereby filling the space between the molds with the two resins (Fig. 12). The time (t₄ to t₇) required from completion of supply of the first resin to the start of supply of the second resin was two seconds.
④ The molds were cooled for 30 seconds to cool and solidify the supplied molten resins 15a and 15b.
Thereafter, the molds were opened to remove the molded article (t₉).

The closing pressure required for the injection-molding at this time was 114 kgf/cm². The first and second resins were sufficiently integrated with each other. As for the outer appearance of the obtained molded article, the injection-molded portion requiring an excellent outer appearance was satisfactorily produced on its entire surface without any luster variation although luster variations were slightly observed at the resin-supplying gate portion of the press-molded portion.

### Comparative Example 1

A molded article having the same shape as that in Example 1 was obtained following the same procedures as in Example 1 except that 600 g of the molten thermoplastic resin were supplied from all the resin-supplying gates 4a and 4b into the cavity while maintaining the cavity clearance 3 to 6 mm, the closing operation was performed until the cavity clearance 3 became 2.5 mm, and injection molding in the step ③ was omitted.

The closing pressure required at this time (press-molding) was 68 kgf/cm². However, the obtained molded article had luster variations at all the resin-supplying gate portions.

### Comparative Example 2

A molded article having the same shape as that in Example 1 was obtained following the same procedures as in Example 1 except that the closing operation was performed until the cavity clearance B became 2.5 mm without supplying the first resin in the step ①, and 600 g of the molten thermoplastic resin were injected from all the resin-supplying gates 4a and 4b into the cavity in the closed state while maintaining the clearance.

The obtained molded article had an excellent outer appearance without luster variation. However, the closing pressure (injection-molding) was as high as 205 kgf/cm².

### Example 2

A thermoplastic molded article shown in Figs. 7 and 8 was produced using the mold assembly shown in Fig. 3 in accordance with the timing chart shown in Fig. 13 and the steps shown in Figs. 14 to 17.

In this example, the used thermoplastic resin, the temperature of the supplied thermoplastic resin, the temperature of the molds, and the shape of the molded article were the same as those in Example 1.
① The pair of molds comprising the movable second mold 1b and the fixed first mold 1a were set in the first open state wherein the cavity clearance B was 600 mm, and the movable dam 12 was caused to project such that the distal end thereof projected from the cavity face 3a by 10 mm (T₁).
② While pushing down the movable dam 12, the second mold 1b was lowered and set in the second open state wherein the cavity clearance B was 6 mm (T₂ to T₄), and 250 g of the first molten thermoplastic resin 15a, which corresponded to 1.05 times by weight the resin amount necessary for forming the press-molded portion, were supplied from the first resin-supplying gate 4a into a portion surrounded by the movable dam 12 through the first resin passage 6a in three seconds (T₅ to T₆) (Fig. 14).
③ After the first molten resin 15a was supplied, the first resin-supplying gate 4a was closed. The second mold 1b was further lowered and closed at closing pressure of 65 kgf/cm² while pushing down the movable dam 12 until the cavity clearance B became 2.5 mm (T₇ to T₈) (Fig. 15).
④ While maintaining this state, the movable dam 12 was returned into the mold until the distal end of the movable dam 12 matched the cavity face 3a of the first mold 1a (T₈ to T₉).
⑤ The second resin-supplying gate 4b was kept open while applying the closing pressure to maintain this state, and 350 g of the second molten thermoplastic resin 15b were injected into the remaining cavity in four seconds (T₁₀ to T₁₁) (Fig. 16), thereby filling the space between the molds with the two resins (Fig. 17). The time (T₆ to T₁₀) required from completion of supply of the first resin to the start of supply of the second resin was two seconds.
⑥ The molds were cooled for 30 seconds to cool and solidify the supplied molten resins 15a and 15b. Thereafter, the molds were opened to remove the molded article(T₁₂).

The closing pressure required for the injection-molding at this time was 114 kgf/cm². The first and second resins were sufficiently integrated with each other. As for the outer appearance of the obtained molded article, the injection-molded portion requiring an excellent outer appearance was satisfactorily produced on its entire surface without any luster variation although luster variations were slightly observed at the resin-supplying gate portion of the press-molded portion.

### Example 3

A multilayer molded article partially laminated with a skin material shown in Figs. 18 and 19 was produced using the mold assembly shown in Fig. 1 in accordance with the timing chart shown in Fig. 4 and the steps shown in Figs. 20 to 24.

In this example, the temperature of the supplied molten thermoplastic resin was 200°C, and the temperature of the molds was 40°C.
① The pair of molds comprising the movable second mold 1b and the fixed first mold 1a were set in the first open state wherein the cavity clearance B was 600 mm, and the skin material 17 cut into a predetermined size was placed such that the foamed sheet side was brought into contact with the cavity face 3a of the first mold (Fig. 20).
② The second mold 1b was lowered and set in the second open state wherein the cavity clearance B was 30 mm (t₁ to t₂), and the first molten thermoplastic resin 15a in an amount corresponding to 1.3 times by weight the resin amount of the base material portion to be laminated with the skin material and 35 wt% of the total thermoplastic resin to be supplied was supplied between the skin material 17 and the cavity face 3a of the first mold 1a from the first resin-supplying gate 4a through the first resin passage 6a in three seconds (t₃ to t₄) (Fig. 21).
③ After the first molten resin 15a was supplied, the first resin-supplying gate 4a was closed. The second mold 1b was lowered and closed at a closing pressure of 50 kgf/cm² until the cavity clearance B became 5 mm (t₅ to t₆) (Fig. 22).
④ The second resin-supplying gate 4b was kept open while applying the closing pressure to maintain this state, and the second molten thermoplastic resin 15b was injected into the space between the molds, which corresponded to the non-laminated area, in five seconds (t₇ to t₈) (Fig. 23), thereby filling the space between the molds with the two resins (Fig. 24). The rime (t₄ to t₇) required from completion of supply of the first resin to the start of supply of the second resin was two seconds.
⑤ While maintaining this state, the molds were cooled for 30 seconds to cool and solidify the supplied molten resins 15a and 15b. Thereafter, the molds were opened to remove the molded article (t₉).

The produced multilayer molded article laminated with the skin material had an excellent outer appearance without any positional shift or breakage of the skin material and without any wrinkle or luster variation even at the skin material non-laminated portion. The closing pressure required for the injection-molding at this time was 114 kgf/cm².
Further, the first and second resins were sufficiently integrated with each other.

### Comparative Example 3

A molded article was obtained following the same procedures as in Example 3 except that, after the skin material 17 was placed such that the foamed sheet side was brought into contact with a predetermined cavity face 3a of the first mold 1a, the second mold 1b was lowered until the cavity clearance B became 5 mm without supplying the first molten resin, and, in this state, the total amount of the molten thermoplastic resin was injected from all the resin-supplying gates 4a and 4b. into the cavity in the closed state.

The molding conditions including the used thermoplastic resin, the temperature of the supplied resin, the skin material, and the temperature of the molds were the same as those in Example 3.

The closing pressure (injection-molding) was as high as 205 kgf/cm². The obtained multilayer molded article was poor in outer appearance because the skin material was shifted from the predetermined position by positional shift, the grain patterns on the surface of the skin material were partially eliminated, and three-dimensional patterns were generated on the surface because of destruction of the foamed layer.

### Comparative Example 4

A molded article was obtained following the same procedures as in Example 3 except that, after the skin material 17 was placed such that the foamed sheet side was brought into contact with a predetermined cavity face 3a of the first mold 1a, the second mold 1b was lowered until the cavity clearance B became 20 mm, and in this state, the total amount of the molten thermoplastic resin was supplied between the skin material 17 and the cavity face 3a of the first mold 1a from all the resin-supplying gates 4a and 4b, and the second mold 1b was lowered and closed until the cavity clearance B became 5 mm to perform press molding (without performing injection molding).

The molding conditions including the used thermoplastic resin, the temperature of the supplied resin, the skin material, and the temperature of the molds were the same as those in Example 3.

The skin material of the obtained molded article had an excellent outer appearance without positional shift. However, luster variations were generated on the surface of the resin portion not laminated with the skin material.

### Example 4

A multilayer molded article partially laminated with the skin material shown in Figs. 18 and 19 was produced using the mold assembly shown in Fig. 3 in accordance with the timing chart shown in Fig. 13 and the steps shown in Figs. 25 to 29.

In this example, the used thermoplastic resin, the skin material, and the temperature of the supplied thermoplastic resin, and the temperature of the molds were the same as those in Example 3.
① The pair of molds comprising the movable second mold 1b and the fixed first mold 1a were set in the first open state wherein the cavity clearance B was 600 mm, and the movable dam 12 was caused to project such that the distal end thereof projected from the cavity face 3a by 35 mm (T₁).
② The skin material 17 cut into a predetermined size was placed on the portion surrounded by the movable dam 12 such that the foamed sheet side was brought into contact with the cavity face 3a (Fig. 25).
③ While pushing down the movable dam 12, the second mold 1b was lowered and set in the second open state wherein the cavity clearance B was 30 mm (T₂ to T₄), and the molten thermoplastic resin 15a in an amount corresponding to 1.05 times by weight the resin amount of the base material portion to be laminated with the skin material and 28 wt% of the total thermoplastic resin to be supplied was supplied from the first resin-supplying gate 4a into a space surrounded by the skin material 17, the movable dam 12 and the cavity face 3a through the first resin passage 6a for three seconds (T₅ to T₆) (Fig. 26).
④ After the first molten resin 15a was supplied, the first resin-supplying gate 4a was closed. The second mold 1b was further lowered and closed at a closing pressure of 65 kgf/cm² while pushing down the movable dam 12 until the cavity clearance B became 5 mm (T₇ to T₈) (Fig. 27).
⑤ While maintaining this state, the movable dam 12 was returned into the mold until the distal end of the movable dam 12 matched the cavity face 3a (T₈ to T₉).
⑥ While maintaining the closing pressure, the second resin-supplying gate 4b was opened to inject the second molten thermoplastic resin 15b into the remaining cavity, in five seconds (T₁₀ to T₁₁) (Fig. 28), thereby filling the space between the molds with the two resins (Fig. 29). The time (T₆ to T₁₀) required from completion of supply of the first resin to the start of supply of the second resin was two seconds.
⑦ The molds were cooled for 30 seconds to cool and solidify the supplied molten resins 15a and 15b. Thereafter, the molds were opened to remove the molded article (T₁₂).

The produced multilayer molded article laminated with the skin material had an excellent outer appearance without any positional shift or breakage of the skin material and without any wrinkles and luster variation even at the skin material non-laminated area. The closing pressure required for the injection-molding at this time was 114 kgf/cm². Further, The first and second resins were sufficiently integrated with each other.

From the invention thus described, it will be obvious that the invention may be varied in many ways. Such variations are not to be regarded as a departure from the scope of the invention, and all such modifications as would be obvious to one skilled in the art are intended for inclusion within the scope of the following claims.

The basic Japanese Applications No. 158496/1994 filed on July 11, 1994 and No. 166946/1994 filed on July 19, 1994 are hereby incorporated by reference.

## Claims

1. A method for producing a thermoplastic resin molded article, comprising the steps of:
(a) supplying a first molten thermoplastic resin (15a) from a first resin-supplying gate (4a) to a first portion of a cavity formed between a cavity face (3a) of a first mold (1a) and a cavity face (3b) of a second mold (1b), said first and second molds being in an open state;
(b) closing said first mold (1a) and said second mold (1b) to set the cavity in a closed state;
(c) starting injecting a second molten thermoplastic resin (15b) from a second resin-supplying gate (4b) to a second portion of the cavity in the closed state under reducing dwell pressure of the first and second molds (1a, 1b) or in a slightly opened state due to the second resin injection pressure which is larger than the dwell pressure of the first and second molds (1a, 1b), said states meaning such a degree that the second resin (15b) injected does not flow into the first portion under the second resin injection pressure;
(d) closing again said first mold (1a) and said second mold (1b) to set the cavity in a fully closed state until the final product thickness (F) is achieved after the second resin (15b) is completely supplied, in the case where the molds (1a, 1b) have been slightly opened previously;
(e) cooling and solidifying said first and second resins (15a, 15b) in the cavity in the closed state; and
(f) opening said first mold (1a) and said second mold (1b) to remove said molded article.

2. A method according to claim 1, wherein said thermoplastic resin molded article is constituted by a press-molded portion and an injection-molded portion,
in the step (a), said first resin (15a) is supplied to said first portion of the cavity in the open state in a first amount necessary for forming said press-molded portion, of a total resin amount to be supplied into the cavity,
in the step (b), said first resin (15a) is press-molded, and,
in the step (c), said second resin (15b) is injected to said second portion of the cavity in the closed state in a second amount necessary for forming said injection-molded portion, and thereby, said second resin (15b) is injection-molded.

3. A method according to claim 1, further comprising the step of arranging a skin material in said first portion of the cavity in the open state before said first molten thermoplastic resin (15a) is supplied, and, wherein,
in the step (a), said first resin (15a) is supplied from said first resin-supplying gate (4a) to said first portion of the cavity,
in the step (b), said first mold (1a) and said second mold (1b) are closed to set the cavity in the closed state,
in the step (c), said second molten thermoplastic resin (15b) is injected from said second resin-supplying gate (4b) to said second portion of the cavity in the closed state,
in the step (e), said first and second resins (15a,15b) are cooled and solidified in the cavity in the closed state, and,
in the step (f), said first mold and said second mold (1a, 1b) are opened to remove said molded article.

4. A method according to claim 3, wherein said first resin (15a) is supplied between said skin material and at least one cavity face of said cavity faces of said first and second molds (1a, 1b).

5. A method according to claims 3 or 4, wherein said thermoplastic resin molded article is constituted by a press-molded portion and an injection-molded portion, and said skin material is laminated on at least a part of said press-molded portion,
in the step (a), said first resin (15a) is supplied to said first portion of the cavity in the open state in a first amount necessary for forming said press-molded portion, of a total resin amount to be supplied into the cavity,
in the step (b), said first resin (15a) is press-molded, and,
in the step (c), said second resin (15b) is injected to said second portion of the cavity in the closed state in a second amount necessary for forming said injection-molded portion, and thereby, said second resin (15b) is injection-molded.

6. A method according to any one of claims 1 to 5, further comprising the steps of:
(g) causing a movable dam (12) arranged in at least one mold of said first mold (1a) and said second mold (1b) to project from a cavity face of said mold into the cavity in the open state before said first molten thermoplastic resin (15a) is supplied, thereby partitioning the cavity into said first portion and said second portion; and
(h) returning said movable dam (12) into said mold before injection of said second resin (15b).

7. A method according to any one of claims 1 to 6, wherein said skin material is arranged in said first portion of the cavity such that an edge portion of said skin material is set along said movable dam (12).

8. A method according to any one of claims 1 to 7, wherein, in the step (a), said first resin (15a) is supplied from said resin-supplying gate (4a) which is arranged on at least one cavity face of said cavity faces (3a, 3b) of said first and second molds (1a, 1b), and,
in the step (c), said second resin (15b) is injected from said second resin-supplying gate (4b) which is arranged on at least one cavity face of said cavity faces of said first and second molds (1a, 1b).

9. A method according to any one of claims 1 to 8, wherein, in the step (b), said first mold (1a) and said second mold (1b) are closed until a cavity clearance between said cavity face (3a) of said first mold (1a) and said cavity face (3b) of said second mold (1b) substantially matches a thickness of a desired molded article, and,
in the step (c), said second resin (15b) is injected to said second portion of the cavity while holding the cavity clearance.

10. A method according to any one of claims 1 to 9, wherein, in the step (b), the first and second molds (1a, 1b) are closed at a closing pressure of 30 to 90 kgf/cm², and,
in the step (c), said second resin (15b) is injected to said second portion of the cavity at a closing pressure of 100 to 400 kgf/cm².

11. A method according to any one of claims 1 to 10, wherein injection of said second resin (15b) is started 0 to 30 second after said first resin (15a) is completely supplied.

12. A method according to claim 1, wherein the thermoplastic resin molded article consists of said first molten thermoplastic resin (15a) and said second molten thermoplastic resin (15b) without any skin materials being arranged on the surface of the thermoplastic resin molded article, and, in the step (a), the first molten thermoplastic resin (15a) is supplied from the first resin-supplying gate (4a) to the first portion of the cavity formed between the cavity face (3a) of the first mold (1a) and the cavity face (3b) of the second mold (1b), said first and second molds (1a, 1b) being in an open state with the provison that said first molten thermoplastic resin (15a) is not supplied between any skin materials and at least one cavity face of cavity faces (3a, 3b) of said first and second molds (1a, 1b).

13. A mold assembly for molding a thermoplastic resin, comprising:
a first mold (1a) having a cavity face (3a);
a second mold (1b) having a cavity face (3b) opposing said cavity face (3a) of said first mold (1a);
a first resin-supplying unit (4a, 5a, 6a, 7) for supplying a first molten thermoplastic resin (15a) to a first portion of a cavity formed between said cavity face (3a) of said first mold (1a) and said cavity face (3b) of said second mold (1b);
a second resin-supplying unit (4b, 5b, 6b, 7) for supplying a second molten thermoplastic resin (15b) to a second portion of the cavity;
a press unit (2), connected to said first and second molds (1a, 1b), for moving at least one of said molds between an open position where said first and second molds (1a, 1b) are in an open state and a closed position where said molds (1a, 1b) are in a closed state and maintaining said first and second molds (1a, 1b) at a predetermined dwell pressure; and
a control unit (8) connected to said press unit (2) and said first and second resin-supplying units (4, 5, 6, 7), said control unit (8) driving said first resin-supplying unit (4a, 5a, 6a, 7) for a first period of time to supply said first resin (15a) while said first and second molds (1a, 1b) are maintained in the open state by said press unit (2), driving said press unit (2) to close said first and second molds (1a, 1b) at a first closing pressure and set said molds (1a,1b) in the closed state while or after said first resin (15a) is supplied, driving said second resin-supplying unit (4b, 5b, 6b, 7) for a second period of time to inject said second resin (15b) While maintaining said first and second molds (1a, 1b) at a second closing pressure after completion of closing of said molds (1a, 1b), and driving said press unit (2) to open said first and second molds (1a, 1b) after a third period of time elapses from completion of injection of said second resin (15b).

14. A mold assembly according to claim 13, wherein the open state includes a first open state wherein said molds (1a, 1b) are arranged with a cavity clearance such that a molded article between said first and second molds (1a, 1b) can be removed, and a second open state wherein the cavity clearance is smaller than that in the first open state, and said control unit (8) drives said press unit (2) to shift said first and second molds (1a, 1b) from the first open state to the second open state, and thereafter, drives said first resin-supplying unit (4a, 5a, 6a, 7) while maintaining said molds (1a, 1b) in the second open state.

15. A mold assembly for molding a thermoplastic resin, comprising:
a first mold (1a) having a cavity face (3a) and a groove (11) communicating with said cavity face (3a);
a second mold (1b) having a cavity face (3b) opposing said cavity face (3a) of said first mold (1a);
a movable dam (12) received in the groove (11);
a dam driving unit (13) for moving said movable dam (12) between a first position where said movable dam (12) is completely received into said first mold (1a) and a second position where a part of said movable dam (12) projects from said cavity face (3a) of said mold (1a) to partition a cavity formed between said cavity face (3a) of said first mold (1a) and said cavity face (3b) of said second mold (1b) into a first portion and a second portion;
a first resin-supplying unit (4a, 5a, 6a, 7) for supplying a first molten thermoplastic resin (15a) to said first portion of the cavity;
a second resin-supplying unit (4b, 5b, 6b, 7) for supplying a second molten thermoplastic resin (15b) to said second portion of the cavity;
a press unit (2), connected to said first and second molds (1a, 1b), for moving at least one of said molds (1a, 1b) between an open position where said first and second molds (1a, 1b) are in an open state and a closed position where said molds (1a, 1b) are in a closed state and maintaining said first and second melds (1a, 1b) at a predetermined dwell pressure; and
a control unit (8) connected to said press unit (2), said first and second resin-supplying units (4, 5, 6, 7), and said dam driving unit (13), said control unit (8) driving said dam driving unit (13) to cause said part of said movable dam (12) to project into the cavity, driving said first resin-supplying unit (4a, 5a, 6a, 7) for a first period of time to supply said first resin (15a) while said first and second molds (1a, 1b) are maintained in the open state by said press unit (2), driving said cress unit (2) to close said first and second molds (1a, 1b) at a first closing pressure and set said molds (1a, 1b) in the closed state while or after said first resin (15a) is supplied, driving said dam driving unit (13) in a manner interlocked with closing of said first and second molds (1a, 1b) to return said movable dam (12) into said mold, driving said second resin-supplying unit (4b, 5b, 6b, 7) for a second period of time to inject said second resin (15b) while maintaining said first and second molds (1a, 1b) at a second closing pressure after completion of closing of said molds (1a, 1b), and driving said press unit (2) to open said first and second molds (1a, 1b) after a third period of time elapses from completion of injection of said second resin (15b).

16. A mold assembly according to claim 15, wherein the open state includes a first open state wherein said molds (1a, 1b) are arranged with a cavity clearance such that a molded article between said first and second molds (1a, 1b) can be removed, and a second open state wherein the cavity clearance is smaller than that in the first open state, and said control unit (8) drives said press unit (2) to shift said first and second molds (1a, 1b) from the first open state to the second open state after said part of said movable dam (12) is caused to project into the cavity, and thereafter, drives said first resin-supplying unit (4a, 5a, 6a, 7) while maintaining said molds (1a, 1b) in the second open state.

17. A mold assembly according to any one of claims 13 to 16, further comprising a position detection unit (9), connected to said control unit (8), for detecting a position of at least one of said first and second molds (1a, 1b).

18. A mold assembly according to any one of claims 11 to 17, wherein said control unit (8) stops driving said first resin-supplying unit (4a, 5a, 6a, 7) before driving of said press unit (2) is stopped, and starts to drive said second resin-supplying unit (4b, 5b, 6b, 7) 0 to 30 seconds after said driving of said first resin-supolying unit is stopped.

19. A mold assembly according to any one of claims 11 to 18, wherein said control unit (8) maintains the closing pressure during closing of said first and second molds (1a, 1b) at 30 to 90 kgf/cm² and the closing pressure during supply of said second resin (15b) at 100 to 400 kgf/cm².

## Patentansprüche

1. Verfahren zur Herstellung eines thermoplastischen Harzformkörpers, mit den folgenden Schritten:
(a) Einbringen eines ersten geschmolzenen thermoplastischen Harzes (15a) aus einem ersten Harzeinlauf (4a) in einen ersten Abschnitt eines Hohlraums, der zwischen einer Hohlraumfläche (3a) einer ersten Form (1a) und einer Hohlraumfläche (3b) einer zweiten Form (16) ausgebildet ist, wobei sich die erste und die zweite Form in einem geöffneten Zustand befinden;
(b) Schließen der ersten Form (1a) und der zweiten Form (1b), um den Hohlraum in einen geschlossenen Zustand zu bringen;
(c) Beginn des Einspritzens eines zweiten geschmolzenen thermoplastischen Harzes (15b) aus einem zweiten Harzeinlauf (4b) in einen zweiten Abschnitt des Hohlraums unter Verminderung des Nachdrucks der ersten und der zweiten Form (1a, 1b) oder in einem leicht geöffneten Zustand infolge des zweiten Harzeinspritzdrucks, der größer ist als der Nachdruck der ersten und der zweiten Form (1a, 1b), wobei die Zustände bedeuten, daß das eingespritzte zweite Harz (15b) unter dem zweiten Harzeinspritzdruck nicht in den ersten Abschnitt fließt;
(d) Erneutes Schließen der ersten Form (1a) und der zweiten Form (1b), um den Hohlraum in einen vollständig geschlossenen Zustand zu bringen, bis die Endproduktdicke (F) erreicht ist, nach dem vollständigen Einbringen des zweiten Harzes (15b), für den Fall, in dem die Formen (1a, 1b) vorher leicht geöffnet worden sind;
(e) Abkühlen und Erstarrenlassen des ersten und des zweiten Harzes (15a, 15b) im Hohlraum im geschlossenen Zustand; und
(f) Öffnen der ersten Form (1a) und der zweiten Form (1b), um den Formkörper zu entnehmen.

2. Verfahren nach Anspruch 1, wobei der thermoplastische Harzformkörper durch einen formgepreßten Abschnitt und einen spritzgegossenen Abschnitt gebildet wird,
wobei im Schritt (a) das erste Harz (15a) in einer ersten, zum Formen des formgepreßten Abschnitts notwendigen Menge von einer in den Hohlraum einzubringenden Gesamtharzmenge in den ersten Abschnitt des Hohlraums im geöffneten Zustand eingebracht wird,
wobei im Schritt (b) das erste Harz (15a) formgepreßt wird,
wobei im Schritt (c) das zweite Harz (15b) in einer zweiten, zum Formen des spritzgegossenen Abschnitts notwendigen Menge in den zweiten Abschnitt des Hohlraums im geschlossenen Zustand eingebracht und dadurch das zweite Harz (15b) spritzgegossen wird.

3. Verfahren nach Anspruch 1, das ferner den Schritt zum Anordnen eines Hautmaterials in dem ersten Abschnitt des Hohlraums im geöffneten Zustand aufweist, bevor das erste geschmolzene thermoplastische Harz (15a) eingebracht wird, und wobei
im Schritt (a) das erste Harz (15a) aus dem ersten Harzeinlauf (4a) in den ersten Abschnitt des Hohlraums eingebracht wird,
im Schritt (b) die erste Form (1a) und die zweite Form (1b) geschlossen werden, um den Hohlraum in den geschlossenen Zustand zu bringen,
im Schritt (c) das zweite geschmolzene thermoplastische Harz (15b) aus dem zweiten Harzeinlauf (4b) in den zweiten Abschnitt des Hohlraums im geschlossenen Zustand eingespritzt wird,
im Schritt (e) das erste und das zweite Harz (15a, 15b) im Hohlraum im geschlossenen Zustand abgekühlt und zum Erstarren gebracht werden, und
im Schritt (f) die erste Form und die zweite Form (1a, 1b) geöffnet werden, um den Formartikel zu entnehmen.

4. Verfahren nach Anspruch 3, wobei das erste Harz (15a) zwischen dem Hautmaterial und mindestens einer Hohlraumfläche von den Hohlraumflächen der ersten und der zweiten Form (1a, 1b) eingebracht wird.

5. Verfahren nach Anspruch 3 oder 4, wobei der thermoplastische Harzformkörper durch einen formgepreßten Abschnitt und einen spritzgegossenen Abschnitt gebildet wird und das Hautmaterial auf mindestens einen Teil des formgepreßten Abschnitts laminiert wird,
wobei im Schritt (a) das erste Harz (15a) in einer ersten, zum Formen des formgepreßten Abschnitts notwendigen Menge von einer in den Hohlraum einzubringenden Gesamtharzmenge in den ersten Abschnitt des Hohlraums im geöffneten Zustand eingebracht wird,
wobei im Schritt (b) das erste Harz (15a) formgepreßt wird, und
wobei im Schritt (c) das zweite Harz (15b) in einer zweiten, zum Formen des spritzgegossenen Abschnitts notwendigen Menge in den zweiten Abschnitt des Hohlraums im geschlossenen Zustand eingebracht wird und dadurch das zweite Harz (15b) spritzgegossen wird.

6. Verfahren nach einem der Ansprüche 1 bis 5, das ferner die folgenden Schritte aufweist:
(g) Ausfahren eines verschiebbaren Damms (12), der in mindestens einer Form von der ersten Form (1a) und der zweiten Form (1b) angeordnet ist, so daß er aus einer Hohlraumfläche dieser Form in den Hohlraum in geöffneten Zustand vorsteht, bevor das erste geschmolzene thermoplastische Harz (15a) eingebracht wird, wodurch der Hohlraum in einen ersten Abschnitt und einen zweiten Abschnitt unterteilt wird; und
(h) Einfahren des verschiebbaren Damms (12) in die Form vor dem Einspritzen des zweiten Harzes (15b).

7. Verfahren nach einem der Ansprüche 1 bis 6, wobei das Hautmaterial im ersten Abschnitt des Hohlraums so angeordnet ist, daß ein Kantenabschnitt des Hautmaterials entlang dem verschiebbaren Damm (12) fixiert ist bwz. verläuft.

8. Verfahren nach einem der Ansprüche 1 bis 7, wobei im Schritt (a) das erste Harz (15a) aus dem ersten Harzeinlauf (4a) eingebracht wird, der an mindestens einer Hohlraumfläche von den Hohlraumflächen (3a, 3b) der ersten und der zweiten Form (1a, 1b) angeordnet ist, und
wobei im Schritt (c) das zweite Harz (15b) aus dem zweiten Harzeinlauf (4b) eingespritzt wird, der an mindestens eine Hohlraumfläche von den Hohlraumflächen der ersten und der zweiten Form (1a, 1b) angeordnet ist.

9. Verfahren nach einem der Ansprüche 1 bis 8, wobei im Schritt (b) die erste Form (1a) und die zweite Form (1b) geschlossen werden, bis ein Hohlraumabstand zwischen der Hohlraumfläche (3a) der ersten Form (1a) und der Hohlraumfläche (3b) der zweiten Form (1b) im wesentlichen mit einer Dicke eines gewünschten Formkörpers übereinstimmt, und
wobei im Schritt (c) das zweite Harz (15b) unter Aufrechterhaltung des Hohlraumabstands in den zweiten Abschnitt des Hohlraums eingespritzt wird.

10. Verfahren nach einem der Ansprüche 1 bis 9, wobei im Schritt (b) die erste und die zweite Form (1a, 1b) mit einem Schließdruck von 30 bis 90 kgf/cm² geschlossen werden, und
wobei im Schritt (c) das zweite Harz (15b) unter einem Schließdruck von 100 bis 400 kgf/cm² in den zweiten Abschnitt des Hohlraums eingespritzt wird.

11. Verfahren nach einem der Ansprüche 1 bis 10, wobei mit dem Einspritzen des zweiten Harzes (15b) 0 bis 30 Sekunden nach dem vollständigen Einbringen des ersten Harzes (15a) begonnen wird.

12. Verfahren nach Anspruch 1, wobei der thermoplastische Harzformkörper aus dem ersten geschmolzenen thermoplastischen Harz (15a) und dem zweiten geschmolzenen thermoplastischen Harz (15b) besteht, ohne daß Hautmaterialien auf der Oberfläche des thermoplastischen Harzformkörpers angeordnet sind, und wobei im Schritt (a) das erste geschmolzene thermoplastische Harz (15a) aus dem ersten Harzeinlauf (4a) in den ersten Abschnitt des Hohlraums eingebracht wird, der zwischen der Hohlraumfläche (3a) der ersten Form (1a) und der Hohlraumfläche (3b) der zweiten Form (1b) ausgebildet ist, wobei sich die erste und die zweite Form (1a, 1b) in einem geöffneten Zustand befinden, unter der Bedingung, daß das erste geschmolzene thermoplastische Harz (15a) nicht zwischen irgendwelche Hautmaterialien und mindestens eine Hohlraumfläche von den Hohlraumflächen (3a, 3b) der ersten und der zweiten Form (1a, 1b) eingebracht wird.

13. Formzusammenbau zum Formen eines thermoplastischen Harzes, die aufweist:
eine erste Form (1a) mit einer Hohlraumfläche (3a);
eine zweite Form (1b) mit einer Hohlraumfläche (3b), die der Hohlraumfläche (3a) der ersten Form (1a) gegenüberliegt;
eine erste Harzzuführungseinheit (4a, 5a, 6a, 7) zum Einbringen eines ersten geschmolzenen thermoplastischen Harzes (15a) in einen ersten Abschnitt eines Hohlraums, der zwischen der Hohlraumfläche (3a) der ersten Form (1a) und der Hohlraumfläche (3b) der zweiten Form (1b) ausgebildet ist;
eine zweite Harzzuführungseinheit (4b, 5b, 6b, 7) zum Einbringen eines zweiten geschmolzenen thermoplastischen Harzes (15b) in einen zweiten Abschnitt des Hohlraums;
eine mit der ersten und der zweiten Form (1a, 1b) verbundene Presseneinheit (2) zum Bewegen mindestens einer der Formen (1a, 1b) zwischen einer geöffneten Stellung, in der die erste und die zweite Form (1a, 1b) sich in einem offenen Zustand befinden, und einer geschlossenen Stellung, in der die Formen (1a, 1b) sich in einem geschlossenen Zustand befinden, und zum Halten der ersten und der zweiten Form (1a, 1b) unter einem vorgegebenen Nachdruck; und
eine Steuereinheit (8), die mit der Presseneinheit (2) und der ersten und zweiten Harzzuführungseinheit (4, 5, 6, 7) verbunden ist, wobei die Steuereinheit (8) die erste Harzzuführungseinheit (4a, 5a, 6a, 7) während eines ersten Zeitabschnitts steuert, um das erste Harz (15a) einzubringen, während die erste und die zweite Form (1a, 1b) durch die Presseneinheit (2) im geöffneten Zustand gehalten werden, wobei die Steuereinheit (8) die Presseneinheit (2) so steuert, daß die erste und die zweite Form (1a, 1b) unter einem ersten Schließdruck geschlossen werden und die Formen (1a, 1b) in den geschlossenen Zustand gebracht werden, während oder nachdem das erste Harz (15a) eingebracht wird, wobei die Steuereinheit (8) die zweite Harzzuführungseinheit (4b, 5b, 6b, 7) während eines zweiten Zeitabschnitts so steuert, daß das zweite Harz (15b) eingespritzt wird, während die erste und die zweite Form (1a, 1b) nach beendetem Schließen der Formen (1a, 1b) unter einem zweiten Schließdruck gehalten werden, und wobei die Steuereinheit (8) die Presseneinheit (2) so steuert, daß die erste und die zweite Form (1a, 1b) nach Ablauf eines dritten Zeitabschnitts nach Beendigung des Einspritzens des zweiten Harzes (15b) geöffnet werden

14. Formzusammenbau nach Anspruch 13, wobei der offene Zustand einen ersten offenen Zustand, in dem die Formen (1a, 1b) mit einem solchen Hohlraumabstand angeordnet sind, daß ein Formkörper zwischen der ersten und der zweiten Form (1a, 1b) entfernt werden kann, und einen zweiten offenen Zustand aufweist, in dem der Hohlraumabstand kleiner ist als im ersten offenen Zustand, und wobei die Steuereinheit (8) die Presseneinheit (2) so steuert, daß die erste und die zweite Form (1a, 1b) aus dem ersten offenen Zustand in den zweiten offenen Zustand verschoben werden, und wobei die Steuereinheit danach die erste Harzzuführungseinheit (4a, 5a, 6a, 7) steuert, während die Formen (1a, 1b) im zweiten offenen Zustand gehalten werden.

15. Formzusammenbau zum Formen eines thermoplastischen Harzes, die aufweist:
eine erste Form (1a) mit einer Hohlraumfläche (3a) und einer Nut (11), die mit der Hohlraumfläche (3a) in Verbindung steht;
eine zweite Form (1b) mit einer Hohlraumfläche (3b), die der Hohlraumfläche (3a) der ersten Form (1a) gegenüberliegt;
einen in der Nut (11) aufgenommenen verschiebbaren Damm (12);
eine Dammantriebseinheit (13) zum Verschieben des verschiebbaren Damms (12) zwischen einer ersten Position, in der der verschiebbare Damm (12) vollständig in die erste Form (1a) eingefahren ist, und einer zweiten Position, in der ein Teil des verschiebbaren Damms (12) aus der Hohlraumfläche (3a) der Form (1a) vorsteht, um einen Hohlraum, der zwischen der Hohlraumfläche (3a) der ersten Form (1a) und der Hohlraumfläche (3b) der zweiten Form (1b) ausgebildet ist, in einen ersten Abschnitt und einen zweiten Abschnitt zu unterteilen;
eine erste Harzzuführungseinheit (4a, 5a, 6a, 7) zum Einbringen eines ersten geschmolzenen thermoplastischen Harzes (15a) in den ersten Abschnitt des Hohlraums;
eine zweite Harzzuführungseinheit (4b, 5b, 6b, 7) zum Einbringen eines zweiten geschmolzenen thermoplastischen Harzes (15b) in den zweiten Abschnitt des Hohlraums;
eine mit der ersten und der zweiten Form (1a, 1b) verbundene Presseneinheit (2) zum Bewegen mindestens einer der Formen (1a, 1b) zwischen einer geöffneten Stellung, in der die erste und die zweite Form (1a, 1b) sich in einem offenen Zustand befinden, und einer geschlossenen Stellung, in der die Formen (1a, 1b) sich in einem geschlossenen Zustand befinden, und zum Halten der ersten und der zweiten Form (1a, 1b) unter einem vorgegebenen Nachdruck; und
eine Steuereinheit (8), die mit der Presseneinheit (2) und der ersten und zweiten Harzzuführungseinheit (4, 5, 6, 7) sowie mit der Dammantriebseinheit (13) verbunden ist, wobei die Steuereinheit (8) die Dammantriebseinheit (13) so steuert, daß der Teil des verschiebbaren Damms (12) in den Hohlraum vorsteht, wobei die Steuereinheit (8) die erste Harzzuführungseinheit (4a, 5a, 6a, 7) während eines ersten Zeitabschnitts steuert, um das erste Harz (15a) einzubringen, während die erste und die zweite Form (1a, 1b) durch die Presseneinheit (2) im geöffneten Zustand gehalten werden, wobei die Steuereinheit (8) die Presseneinheit (2) so steuert, daß die erste und die zweite Form (1a, 1b) unter einem ersten Schließdruck geschlossen werden und die Formen (1a, 1b) in den geschlossenen Zustand gebracht werden, während oder nachdem das erste Harz (15a) eingebracht wird, wobei die Steuereinheit (8) die Dammantriebseinheit (13) auf eine mit dem Schließen der ersten und der zweiten Form (1a, 1b) verriegelte Weise steuert, um den verschiebbaren Damm (12) in die Form zurückzufahren, wobei die Steuereinheit (8) die zweite Harzzuführungseinheit (4b, 5b, 6b, 7) während eines zweiten Zeitabschnitts so steuert, daß das zweite Harz (15b) eingespritzt wird, während die erste und die zweite Form (1a, 16) nach beendetem Schließen der Formen (1a, 1b) unter einem zweiten Schließdruck gehalten werden, und wobei die Steuereinheit (8) die Presseneinheit (2) so steuert, daß die erste und die zweite Form (1a, 1b) nach Ablauf eines dritten Zeitabschnitts nach Beendigung des Einspritzens des zweiten Harzes (15b) geöffnet werden.

16. Formzusammenbau nach Anspruch 15, wobei der offene Zustand einen ersten offenen Zustand, in dem die Formen (1a, 1b) mit einem solchen Hohlraumabstand angeordnet sind, daß ein Formkörper zwischen der ersten und der zweiten Form (1a, 1b) entfernt werden kann, und einen zweiten offenen Zustand aufweist, in dem der Hohlraumabstand kleiner ist als im ersten offenen Zustand, und wobei die Steuereinheit (8) die Presseneinheit (2) so steuert, daß die erste und die zweite Form (1a, 1b) aus dem ersten offenen Zustand in den zweiten offenen Zustand verschoben werden, nachdem der Teil des verschiebbaren Damms (12) ausgefahren wird und in den Hohlraum vorsteht, und wobei die Steuereinheit danach die erste Harzzuführungseinheit (4a, 5a, 6a, 7) ansteuert, während die Formen (1a, 1b) im zweiten offenen Zustand gehalten werden.

17. Formzusammenbau nach einem der Ansprüche 13 bis 16, die ferner eine mit der Steuereinheit (8) verbundene Positionserfassungseinheit (9) aufweist, um eine Position mindestens einer der ersten und zweiten Formen (1a, 1b) zu erfassen.

18. Formzusammenbau nach einem der Ansprüche 11 bis 17, wobei die Steuereinheit (8) die Steuerung der ersten Harzzuführungseinheit (4a, 5a, 6a, 7) stoppt bevor die Ansteuerung der Presseneinheit (2) angehalten wird, und die Steuerung der zweiten Harzzuführungseinheit (4b, 5b, 6b, 7) 0 bis 30 Sekunden nach dem Stoppen der Steuerung der ersten Harzzuführungseinheit startet.

19. Formzusammenbau nach einem der Ansprüche 11 bis 18, wobei die Steuereinheit (8) während des Schließens der ersten und zweiten Formen (1a, 1b) den Schließdruck auf 30 bis 90 kgf/cm² hält und während des Einbringens des zweiten Harzes (15b) den Schließdruck auf 100 bis 400 kgf/cm² hält.

## Revendications

1. Procédé de production d'un article moulé de résine thermoplastique comprenant les étapes suivantes :
(a) l'amenée d'une première résine thermoplastique fondue (15a) d'une première entrée d'amenée de résine (4a) vers une première partie d'une cavité formée entre une face de cavité (3a) d'un premier moule (1a) et une face de cavité (3b) d'un second moule (1b), le premier et le second moule précités étant à l'état ouvert;
(b) la fermeture du premier moule (1a) et du second moule (1b) pour amener la cavité à l'état fermé:
(c) le commencement d'une injection d'une seconde résine thermoplastique fondue (15b) d'une seconde entrée d'amenée de résine (4b) dans une seconde partie de la cavité à l'état fermé sous une pression de maintien de relâchement du premier et du second moule (1a, 1b) ou à l'état légèrement ouvert dû à la seconde pression d'injection de la résine qui est plus forte que la pression de maintien du premier et du second moule (1a, 1b), lesdits états désignant un degré tel que la seconde résine (15b) injectée ne s'écoule pas dans la première partie sous la pression d'injection de la seconde résine;
(d) la fermeture à nouveau du premier moule (1a) et du second moule (1b) pour amener la cavité à l'état totalement fermé jusqu'à ce que l'épaisseur de produit finale (F) soit obtenue après l'amenée complète de la seconde résine (15b), dans le cas où les moules (1a, 1b) ont été légèrement ouverts préalablement;
(e) le refroidissement et la solidification de la première et de la seconde résine (15a, 15b) dans la cavité à l'état fermé; et
(f) l'ouverture du premier moule (1a) et du second moule (1b) pour enlever l'article moulé précité.

2. Procédé suivant la revendication 1, dans lequel l'article moulé de résine thermoplastique précité est constitué d'une partie moulée par compression et d'une partie moulée par injection,
dans l'étape (a), la première résine (15a) est amenée vers la première partie de la cavité à l'état ouvert en une première quantité nécessaire pour former la partie moulée par compression précitée, d'une quantité de résine totale à amener dans la cavité,
dans l'étape (b), la première résine (15a) est moulée par compression,
dans l'étape (c), la seconde résine (15b) est injectée dans la seconde partie de la cavité à l'état fermé en une seconde quantité nécessaire pour former la partie moulée par injection précitée, et la seconde résine (15b) est ainsi moulée par injection.

3. Procédé suivant la revendication 1, comprenant de plus l'étape d'agencement d'une matière pelliculaire dans la première partie de la cavité à l'état ouvert avant que la première résine thermoplastique fondue (15a) ne soit amenée, et dans lequel,
dans l'étape (a), la première résine (15a) est amenée de la première entrée d'amenée de résine (4a) vers la première partie de la cavité,
dans l'étape (b), le premier moule (1a) et le second moule (1b) sont fermés pour amener la cavité à l'état fermé,
dans l'étape (c), la seconde résine thermoplastique fondue (15b) est injectée de la seconde entrée d'amenée de résine (4b) dans la seconde partie de la cavité à l'état fermé,
dans l'étape (e), la première et la seconde résine (15a, 15b) sont refroidies et solidifiées dans la cavité à l'état fermé, et
dans l'étape (f), le premier moule et le second moule (1a, 1b) sont ouverts pour enlever l'article moulé précité.

4. Procédé suivant la revendication 3, dans lequel la première résine (15a) est amenée entre la matière pelliculaire précitée et au moins une face de cavité des faces de cavité précitées du premier et du second moule (1a, 1b).

5. Procédé suivant l'une ou l'autre des revendications 3 et 4, dans lequel l'article moulé de résine thermoplastique précité est constitué d'une partie moulée par compression et d'une partie moulée par injection, et la matière pelliculaire précitée est stratifiée sur au moins une partie de la partie moulée par compression,
dans l'étape (a), la première résine (15a) est amenée vers la première partie de la cavité à l'état ouvert en une première quantité nécessaire pour former la partie moulée par compression précitée, d'une quantité de résine totale à amener dans la cavité,
dans l'étape (b), la première résine (15a) est moulée par compression, et
dans l'étape (c), la seconde résine (15b) est injectée dans la seconde partie de la cavité à l'état fermé en une seconde quantité nécessaire pour former la partie moulée par injection précitée, et la seconde résine (15b) est ainsi moulée par injection.

6. Procédé suivant l'une quelconque des revendications 1 à 5, comprenant de plus les étapes suivantes :
(g) l'entraînement d'un élément de séparation mobile (12) agencé dans au moins un moule du premier moule (1a) et du second moule (1b) pour dépasser d'une face de cavité du moule précité dans la cavité à l'état ouvert avant que la première résine thermoplastique fondue (15a) ne soit amenée, en partageant ainsi la cavité en la première partie et la seconde partie précitées; et
(h) le renvoi de l'élément de séparation mobile (12) dans ledit moule avant l'injection de la seconde résine (15b).

7. Procédé suivant l'une quelconque des revendications 1 à 6, dans lequel la matière pelliculaire précitée est agencée dans la première partie de la cavité de telle sorte qu'une partie marginale de la matière pelliculaire soit amenée le long de l'élément de séparation mobile (12).

8. Procédé suivant l'une quelconque des revendications 1 à 7, dans lequel,
dans l'étape (a), la première résine (15a) est amenée de la première entrée d'amenée de résine (4a) qui est agencée sur au moins une face de cavité des faces de cavité (3a, 3b) précitées du premier et du second moule (1a, 1b), et
dans l'étape (c), la seconde résine (15b) est injectée de la seconde entrée d'amenée de résine (4b) qui est agencée sur au moins une face de cavité des faces de cavité précitées du premier et du second moule (1a, 1b).

9. Procédé suivant l'une quelconque des revendications 1 à 8, dans lequel,
dans l'étape (b), le premier moule (1a) et le second moule (1b) sont fermés jusqu'à ce qu'un espacement de cavité entre la face de cavité (3a) du premier moule (1a) et la face de cavité (3b) du second moule (1b) corresponde sensiblement à une épaisseur d'un article moulé désiré, et
dans l'étape (c), la seconde résine (15b) est injectée dans la seconde partie de la cavité tout en maintenant l'espacement de cavité.

10. Procédé suivant l'une quelconque des revendications 1 à 9, dans lequel,
dans l'étape (b), le premier et le second moule (1a, 1b) sont fermés à une pression de fermeture de 30 à 90 kgf/cm², et
dans l'étape (c), la seconde résine (15b) est injectée dans la seconde partie de la cavité à une pression de fermeture de 100 à 400 kgf/cm².

11. Procédé suivant l'une quelconque des revendications 1 à 10, dans lequel l'injection de la seconde résine (15b) est commencée 0 à 30 secondes après l'acheminement complet de la première résine (15a).

12. Procédé suivant la revendication 1, dans lequel l'article moulé de résine thermoplastique est formé de la première résine thermoplastique fondue (15a) et de la seconde résine thermoplastique fondue (15b) sans la présence de matières pelliculaires quelconques agencées sur la surface de l'article moulé de résine thermoplastique et, dans l'étape (a), la première résine thermoplastique fondue (15a) est amenée de la première entrée d'amenée de résine (4a) vers la première partie de la cavité formée entre la face de cavité (3a) du premier moule (1a) et la face de cavité (3b) du second moule (1b), le premier et le second moule (1a, 1b) étant à l'état ouvert à la condition que la première résine thermoplastique fondue (15a) ne soit pas amenée entre les éventuelles matières pelliculaires et au moins une face de cavité des faces de cavité (3a, 3b) du premier et du second moule (1a, 1b).

13. Assemblage de moule pour mouler une résine thermoplastique, comprenant :
un premier moule (1a) comportant une face de cavité (3a);
un second moule (1b) comportant une face de cavité (3b) opposée à la face de cavité (3a) du premier moule (1a);
une première unité d'amenée de résine (4a, 5a, 6a, 7) pour amener une première résine thermoplastique fondue (15a) vers une première partie d'une cavité formée entre la face de cavité (3a) du premier moule (1a) et la face de cavité (3b) du second moule (1b);
une seconde unité d'amenée de résine (4b, 5b, 6b, 7) pour amener une seconde résine thermoplastique fondue (15b) vers une seconde partie de la cavité;
une unité de compression (2), reliée aux premier et second moules (1a, 1b), pour déplacer au moins un desdits moules (1a, 1b) entre une position ouverte dans laquelle le premier et le second moule (1a, 1b) sont à l'état ouvert et une position fermée dans laquelle lesdits moules (1a, 1b) sont à l'état fermé et maintenir le premier et le second moule (1a, 1b) à une pression de maintien prédéterminée; et
une unité de commande (8) reliée à l'unité de compression (2) et aux première et seconde unités d'amenée de résine (4, 5, 6, 7), l'unité de commande (8) entraînant la première unité d'amenée de résine (4a, 5a, 6a, 7) pendant une première période de temps pour amener la première résine (15a) pendant que le premier et le second moule (1a, 1b) sont maintenus à l'état ouvert par l'unité de compression (2), entraînant l'unité de compression (2) pour fermer le premier et le second moule (1a, 1b) à une première pression de fermeture et amener les moules (1a, 1b) à l'état fermé pendant ou après l'amenée de la première résine (15a), entraînant la seconde unité d'amenée de résine (4b, 5b, 6b, 7) pendant une seconde période de temps pour injecter la seconde résine (15b) tout en maintenant le premier et le second moule (1a, 1b) à une seconde pression de fermeture après l'achèvement de la fermeture des moules (1a, 1b), et entraînant l'unité de compression (2) pour ouvrir le premier et le second moule (1a, 1b) après une troisième période de temps s'écoulant après l'achèvement de l'injection de la seconde résine (15b).

14. Assemblage de moule suivant la revendication 13, dans lequel l'état ouvert comprend un premier état ouvert dans lequel les moules (1a, 1b) sont agencés avec un espacement de cavité tel qu'un article moulé entre le premier et le second moule (1a, 1b) puisse être enlevé, et un second état ouvert dans lequel l'espacement de cavité est plus petit que dans le premier état ouvert, et l'unité de commande (8) entraîne l'unité de compression (2) pour déplacer le premier et le second moule (1a, 1b) du premier état ouvert au second état ouvert, et ensuite entraîne la première unité d'amenée de résine (4a, 5a, 6a, 7) tout en maintenant les moules (1a, 1b) dans le second état ouvert.

15. Assemblage de moule pour mouler une résine thermoplastique, comprenant :
un premier moule (1a) comportant une face de cavité (3a) et une rainure (11) communiquant avec la face de cavité (3a);
un second moule (1b) comportant une face de cavité (3b) opposée à la face de cavité (3a) du premier moule (1a);
un élément de séparation mobile (12) logé dans la rainure (11);
une unité d'entraînement d'élément de séparation (13) pour déplacer l'élément de séparation mobile (12) entre une première position dans laquelle l'élément de séparation mobile (12) est complètement logé dans le premier moule (1a) et une seconde position dans laquelle une partie de l'élément de séparation mobile (12) dépasse de la face de cavité (3a) du moule (1a) pour partager une cavité formée entre la face de cavité (3a) du premier moule (1a) et la face de cavité (3b) du second moule (1b) en une première partie et une seconde partie;
une première unité d'amenée de résine (4a, 5a, 6a, 7) pour amener une première résine thermoplastique fondue (15a) vers la première partie de la cavité;
une seconde unité d'amenée de résine (4b, 5b, 6b, 7) pour amener une seconde résine thermoplastique fondue (15b) vers la seconde partie de la cavité;
une unité de compression (2) reliée au premier et second moule (1a, 1b) pour déplacer au moins un des moules (1a, 1b) entre une position ouverte dans laquelle le premier et le second moule (1a, 1b) sont à l'état ouvert et une position fermée dans laquelle les moules (1a, 1b) sont à l'état fermé et maintenir le premier et le second moule (1a, 1b) à une pression de fermeture prédéterminée; et
une unité de commande (8) reliée à l'unité de compression (2), aux première et seconde unités d'amenée de résine (4, 5, 6, 7) et à l'unité d'entraînement d'élément de séparation (13), l'unité de commande (8) entraînant l'unité d'entraînement d'élément de séparation (13) pour amener la partie précitée de l'élément de séparation mobile (12) à émerger dans la cavité, entraînant la première unité d'amenée de résine (4a, 5a, 6a, 7) pendant une première période de temps pour amener la première résine (15a) pendant que le premier et le second moule (1a, 1b) sont maintenus à l'état ouvert par l'unité de compression (2), entraînant l'unité de compression (2) pour fermer le premier et le second moule (1a, 1b) à une première pression de fermeture et amener les moules (1a, 1b) à l'état fermé pendant ou après l'amenée de la première résine (15a), entraînant l'unité d'entraînement d'élément de retenue (13) d'une manière enclenchée avec la fermeture du premier et du second moule (1a, 1b) pour renvoyer l'élément de séparation mobile (12) dans le moule précité, entraînant la seconde unité d'amenée de résine (4b, 5b, 6b, 7) pendant une seconde période de temps pour injecter la seconde résine (15b) tout en maintenant le premier et le second moule (1a, 1b) à une seconde pression de fermeture après l'achèvement de la fermeture des moules (1a, 1b), et entraînant l'unité de compression (2) pour ouvrir le premier et le second moule (1a, 1b) après une troisième période de temps s'écoulant après l'achèvement de l'injection de la seconde résine (15b).

16. Assemblage de moule suivant la revendication 15, dans lequel l'état ouvert comprend un premier état ouvert dans lequel les moules (1a, 1b) sont agencés avec un espacement de cavité tel qu'un article moulé entre le premier et le second moule (1a, 1b) puisse être enlevé, et un second état ouvert dans lequel l'espacement de cavité est plus petit que dans le premier état ouvert, et l'unité de commande (8) entraîne l'unité de compression (2) pour déplacer le premier et le second moule (1a, 1b) du premier état ouvert au second état ouvert après que la partie précitée de l'élément de séparation mobile (12) est amenée à émerger dans la cavité, et ensuite entraîne la première unité d'amenée de résine (4a, 5a, 6a, 7) tout en maintenant les moules (1a, 1b) dans le second état ouvert.

17. Assemblage de moule suivant l'une quelconque des revendications 13 à 16, comprenant de plus une unité de détection de position (9), reliée à l'unité de commande (8), pour détecter une position d'au moins un des premier et second moules (1a, 1b).

18. Assemblage de moule suivant l'une quelconque des revendications 11 à 17, dans lequel l'unité de commande (8) arrête l'entraînement de la première unité d'amenée de résine (4a, 5a, 6a, 7) avant que l'entraînement de l'unité de compression (2) ne soit arrêté, et commence à entraîner la seconde unité d'amenée de résine (4b, 5b, 6b, 7) 0 à 30 secondes après que l'entraînement de la première unité d'amenée de résine est arrêté.

19. Assemblage de moule suivant l'une quelconque des revendications 11 à 18, dans lequel l'unité de commande (8) maintient la pression de fermeture au cours de la fermeture du premier et du second moule (1a, 1b) entre 30 et 90 kgf/cm² et la pression de fermeture pendant l'amenée de la seconde résine (15b) entre 100 et 400 kgf/cm².
